# EUROPEAN PATENT APPLICATION

(11) **EP 1 486 431 A1**
(43) Date of publication of application: **15.12.2004**
(21) Application number: 03705348.5
(22) Date of filing: 20.02.2003
(51) Int. Cl.: B65D 65/46, B65D 81/34, B65D 1/09, B32B 9/02, B32B 5/18

(54) **TIGHTLY COVERED CONTAINER**

(30) Priority: 21.02.2002 JP 2002045045
(71) Applicant: Nissei Kabushiki Kaisha, Osaka-shi, Osaka 541-0041 (JP)
(72) Inventor: OZASA, Akio, Kyoto-shi, Kyoto 604-8423 (JP); HASHIMOTO, Akihisa, Kyoto-shi, Kyoto 612-8141 (JP); SHINOHARA, Rumi, Ibaraki-shi, Osaka 567-0821 (JP)
(74) Representative: Bentz, Jean-Paul
(86) International application number: PCT/JP2003/001857
(87) International publication number: WO 2003/070592

(57) **Abstract**

A bowl-shaped container (10a) which is as a hermetically sealed container includes a bowl-shaped container (10a) having a space to contain contents (51) at the inside and an opening to take in and out the contents (51), and a lid (17) mainly made of plastic to seal the opening of the bowl-shaped container (10a), which is heat-sealed to a rim of the opening of the bowl-shaped container (10a). The bowl-shaped container (10a) adheres a coating film (12) mainly made of biodegradable plastic and having at least hydrophobicity to the surface of the main body (11a) of the container mainly made of starch. The main body (11a) is molded through steam expansion of a slurry or dough molding material containing starch and water. For these reasons, it is possible to provide a hermetically sealed container mainly made of starch having sufficient strength and at least sufficient water resistance, and a very excellent biodegradability.

## Description

### TECHNICAL FIELD

The present invention relates to a hermetically sealed container equipped with a main body of a biodegradable container including an expanded molded article mainly derived from starch and having biodegradability and a coating film bonded on a surface thereof, and a lid heat-sealed on a rim of an opening of the main body, particularly to a hermetically sealed container that can be suitably used for disposable expanded molded articles that are disposed after use such as a food container etc.

### BACKGRUOND ART

Conventionally, a plastic molded article and a paper/pulp molded article are the mainstream of a disposable molded article that is disposed after use. This is because in most cases, raw materials of the disposable molded article should be durable and strong and at the same time readily formable depending on usage.

However, the plastic molded article and the paper/pulp molded article both have difficulties to be used as the disposable molded article, as described below.

First, when incinerated, the plastic molded article damages an incinerator because of the generation of extremely high heat, or additionally produces environmental pollutants such as dioxin. Also, when the plastic molded article is buried for reclamation, it is impossible to bury the molded article again where once the same is buried, since plastics are rarely decomposed naturally. Moreover, due to a recent increase of the amount of waste, it has become difficult to secure new dumping sites year after year. Furthermore, continuous environmental pollution for a long period of time could be caused, since the plastic molded article cannot be decomposed easily.

Also, reserves of fossil fuels such as oil, which are raw materials of plastics, are decreasing year after year, so the plastic molded article could become more expensive in the future.

Meanwhile, the paper/pulp molded article is superior to the plastic molded article in that it can be easily disposed of by incineration and can be decomposed naturally. However, trees, which are raw materials of paper and pulps, grow slowly and thus the mass consumption of paper and pulps substantially reduce forest resources. The reduction of forest resources brings about not only heavy destruction of an environment of the area but also a great impairment of an ability of forests to absorb CO₂, and spurs for global warming because of the increase of CO₂, from a broad perspective.

So, to solve the aforementioned problems, particularly from an environmental perspective, the disposal method of the molded article has recently shifted from dumping to recycling.

However, as for the recycling, for instance, when a food container, one of the main use of the disposable molded articles, is recycled, residues in the container such as remaining foods and seasonings have to be removed. This is required to avoid a contamination of impurities in the material to be recycled.

Usually the removal of the residues is washed in water, so this induces another pollution such as an increase of the amount of polluted water and subsequent water pollution in rivers and the sea. Also, the recycling requires high cost, because the removal of the residues itself lowers the efficiency of recycling due to a lot of time and efforts, and the system of recycling has not been really socially established at the moment.

So, what has become a focus of attention is a recently-developed biodegradation disposal method for the molded article by using microbe, as a new disposal method of the'molded article being different from the recycling. This disposal method can avoid the problems above, since in this case the molded article is mainly made of various biodegradable plastics or natural high polymers such as starch.

Especially, in the biodegradation disposal method above, a method to utilize the natural high polymers such as starch and protein particularly draws attentions in terms of its practicality. This is because the various biodegradable plastics have a problem that despite having a fine quality almost comparable to conventional plastics (non-degradable or degradable-retardant), practically they cannot be decomposed quickly enough.

For instance, when a molded article made of the biodegradable plastic is thick, it takes a very long time until the molded article is completely decomposed, so practically it is not possible to produce a molded article with enough volume. Also, when the molded article made of the biodegradable plastic is used particularly as a disposable food container, composting the molded article together with food residues is the least harmful disposal method for the environment. However, actually it is difficult to compost them together since the biodegradable plastic above is only decomposed much slower than the food residues. Furthermore, it is also difficult to crash the molded article to hasten the decomposition of the biodegradable plastic, because normally the molded article cannot be crushed easily when it has a certain thickness and strength. Thus it is almost impossible to compost the molded article made of the biodegradable plastic.

Whereas starch and protein, etc. are positively evaluated as the materials because of advantages such as:
with fine biodegradability, decomposition is quite easy even if the volume is large;
the resources can be acquired easily on account of an availability of a vegetable starch that is mass-produced by agriculture; and
a molded article with adequate thickness and thermal insulation can be acquired, since the molded article is usually used as an expanded molded article.

(1) Japanese Laid-Open Patent Application. No. 5-320401/1993 (Tokukaihei 5-320401; published on December 3, 1993, (2) Japanese Laid-Open Patent Application No. 7-224173/1995 (Tokukaihei 7-224173; published on August 22, 1995), (3) Japanese Laid-Open Patent Application No. 7-10148/1995 (Tokukaihei 7-10148; published on January 13, 1995), (4) Japanese Laid-Open Patent Application No. 2000-142783 (Tokukai 2000-142783; published on May 23, 2000), and (5) Japanese Laid-Open Patent Application No. 7-97545/1995 (Tokukaihei 7-97545 published on April 11, 1995) disclose biodegradable disposal technologies using starch, protein, etc.

First, a molded article derived from the technology (1) or (2) have the advantages that it has better decomposability than a molded article mainly made of the biodegradable plastic and is also superior to those derived from paper/pulps in its diversity of the molded shape, since natural starch is used as the main ingredient. However, at the same time the molded article derived from the technology (1) or (2) has the disadvantages that it can be used only for limited purposes and is required to barrier moisture during storage, due to its poor water and moisture resistance.

Second, a molded article derived from the technology (3) or (4) is mainly made of starch or similar polysaccharide, and to enhance its water resistance, a natural resin (dammar resin, shellac resin, etc.) is covered on the surface of the molded article to form a water-resistant coating film.

However, the surface of the molded article (including expanded molded article) mainly made of starch cannot be completely smoothed, and generation of small irregularities cannot be avoided. Thus small pinholes are likely to be formed on the surface in accordance with the irregularities if the resin is simply covered, so it could be possible to render the molded article water repellent but difficult to make the same complete water resistant. Particularly, if the molded article is required to be moisture-resistant, moisture is likely to be absorbed from the pinholes on the water-resistant coating film, and the molded article becomes apt to be disfigured.

Furthermore, the dammar resin, the shellac resin, etc. must be dissolved in an organic solvent such as alcohol, etc., when applied to the surface. So this causes problems in terms of a manufacturing facility. For instance, when the organic solvent is removed after the coating, large-scale equipment is required to prevent diffusion of the organic solvent in the air that causes air and environment pollution.

Now, on a surface of a molded article derived from the technology (5) that is made of poorly water-resistant biodegradable material such as starch, as in the cases of the molded articles of the technologies (3) and (4) , a biodegradable coating agent composed of aliphatic polyester being dissolved in halogenated hydrocarbon is covered. In this case, using a dip method (dip coating method) for actual coating of the surface, an adequately water-resistant coating film can be formed even on a complicatedly-shaped molded article.

However, in this method, it is required to remove the halogenated hydrocarbon used to dissolve the coating agent, and as in the case of the technologies (3) and (4), problems such as a requirement of equipment to prevent diffusion of halogenated hydrocarbon arise. Many halogenated hydrocarbons are often harmful for a human body and the environment, and the halogenated hydrocarbon that is specifically mentioned in the technology (5) contains CFC so that it should be released to the air as little as possible. On this account, a large-scale hermetic room and a reclaiming device are required as the equipment above.

In addition to the technologies introduced above, there is a technology in which wax or hydrophobic protein, prepared as a coating solution, is covered on the surface of the molded article. Generally speaking, it is difficult to cover a water-resistant coating film on the surface of the molded article evenly and entirely, while coating on a flat molded article such as a flat plate is relatively easy. However, small irregularities are likely to be formed on the surface of the molded article mainly made of starch as described above and obstruct the formation of a uniform film, and furthermore, the molded article or a coating device has to be rotated when the molded article is substantially circular in cross section, for instance like a cup or a bowl. Therefore the coating becomes more difficult.

Besides, even if the coating agent can be applied evenly and entirely by using the dip method, the coating agent runs down before it solidifies and becomes a coating film, and unevenness is likely to show up on the coating film.

The wax has a problem of poor heat resistance due to its relatively low melting point. In the meantime, although the hydrophobic protein has better heat resistance and does not need the organic solvent, the molded article absorbs water and is softened/deformed in the coating process owing to a frequent use of aqueous solvents.

So, a technology that has been proposed is to laminate a water-resistant coating film instead of coating thereof, more specifically, (6) Japanese Laid-Open Patent Application No. 11-171238/1999 (Tokukaihei 11-171238; published on June 29, 1999), (7) Japanese Laid-Open Patent Application No. 5-278738/1993 (Tokukaihei 5-278738; published on October 26, 1993), (8) Japanese Laid-Open Patent Application No. 5-294332/1993 (Tokukaihei 5-294322; published on November 9, 1993).

A container of the technology (6), made by a pulp molding method instead of molding starch, is covered by a water-impermeable or non-absorbing protective layer. This method has the advantage that conventional plastic coating method can be applied almost without any change. However, at the same time the method has problems such as:
the biodegradation of the pulp-molding takes place slowly since it is made of fiber so that the molded article cannot be disposed together with remaining foods, etc.; and
only limited types of molded articles can be produced because it is difficult to make the molded article thicker, and also the molded article is not suitable for a deep drawing.

Meanwhile, to make a biodegradable container, a thin film. made of biodegradable plastic is covered on a surface of the biodegradable container of the technologies (7) or (8) made of either one of natural polysaccharide or protein, or either of the two materials that is chemically modified but still biodegradable.

In this technology, while the biodegradable plastic is provided as the thin water-resistant coating film, the container itself is made of polysaccharide, protein, etc. with enough thickness. On this account, the container is sufficiently water-resistant as well as biodegradable. Thus it can be said that this technology is particularly promising among the disposal technologies by dint of biodegradation using starch, protein, etc.

However, the technology (7) is an arrangement that the biodegradable plastic thin film simply covers the main body of the biodegradable container, and a concrete arrangement of the biodegradable container is hardly mentioned.

For instance, when the main body of the biodegradable container is mainly made of polysaccharide or protein, the main body's strength should be cared of, but the technology (7) does not explain how the biodegradable plastic thin film is actually covered, for instance, by forming it by the coating method or by attaching preformed film, etc.

Moreover, the technology (7) does not stipulate the coating state of the biodegradable plastic thin film on the main body of the biodegradable container at all. The biodegradable plastic thin film covers the main body of the biodegradable container mainly made of polysaccharide or protein, to improve the main body's water resistance. But the technology (7) does not mention how the main body is covered, except that it is simply covered.

Even if the biodegradable container is made as disposable one, still the container should have a stability and durability as a one-way container. So the biodegradable plastic thin film should not fall off from the main body of the biodegradable container, and thus the coating state on the main body is an important factor, but no description with respect to this can be found in (7).

Furthermore, as already described, it is difficult to use biodegradable plastics for a thick molded article due to its slow biodegradation. The speed of the biodegradation also greatly depends on not only the thickness of the molded article but also a total amount of biodegradable plastics contained in the molded article. In relation to this, the technology (7) only describes that an effectiveness of the biodegradation is improved if the main body of the biodegradable container is expanded, and there are no comments on a relationship between a degree of the expansion and the biodegradation, and a balance between the biodegradation of the biodegradable plastic and that of the main body of the biodegradable container. As a result, it is not possible to manage the biodegradation of the whole container favorably.

In the meantime, the technology (8) can be assumed to correspond to one of the manufacturing technologies of the biodegradable container disclosed in the technology (7). In this technology, a thermoplastic is dissolved in a solvent and painted on the surface of the main body of the biodegradable container. Then after the solvent is dried and volatilized, another coating thin film made of thermoplastic is laminated and bonded by thermo compression. That is to say, the technology (8) discloses that thermoplastic is used as an adhesive to bond the coating thin film (equivalent to the biodegradable plastic thin film) securely.

Now, as described in relation to technologies (3) to (5), when the thermoplastic dissolved in the solvent is used, problems such as a requirement of equipment to prevent diffusion of the solvent arise. Moreover, an embodiment of the technology (8) uses chloroform as the solvent, which should be scattered in the air as little as possible. Thus, as in the case of the technology (5), a large-scale hermetic room and reclaiming device are required as the equipment above.

Also, the manufacturing process of the technology (8) acquires the main body of the biodegradable container by press-molding a sheet made of polysaccharide or protein that is preformed by a metal mold. Thus it is impossible to mold molded articles such as. a container with deep drawing shape like a cup, or molded articles having irregular thickness like a food tray with partitions.

Also, as a container for storing foods, a hermetically-sealed container is used, consisting of a main body having a space to contain a food at the inside and an opening to take in and out the above food, as well as a lid film mainly made of plastic to seal the opening of the main body, wherein the lid film is heat-sealed on a rim of the opening.

For instance, as a container for ready-to-eat noodles, a hermetically sealed container is used, wherein a lid film aluminum-deposited to plastic film is heat-sealed on a rim of an opening of a bowl-shaped main body made of foamed polystyrene is used. However, containers used for ready-to-eat noodles are non-biodegradable containers only at present.

Accordingly, a biodegradable hermetically sealed container having the same performances as conventional containers for ready-to-eat noodles, for example, function as a storage container to maintain quality of dry noodles as the contents and to prevent damages during transportation or storage, function as a cooking container to make eatable condition by pouring hot water to rehydrated dry noodles and dissolve powdered soup, and function as tableware to comfortably and safely eat the resulting noodles and exerting a very excellent biodegradability is desirable.

### DISCLOSURE OF INVENTION

The present invention takes the problems above into account, and hence the object is to provide a biodegradable hermetically sealed container that has enough strength and at least enough water resistance, and a very excellent biodegradation.

Moreover, the object of the present invention is to provide a biodegradable hermetically sealed container having a function as a storage container such as enough strength, light blocking effect, flavor blocking effect (aroma retention and odor blocking), and gas impermeability (steam impermeability, oxygen impermeability, etc) to maintain quality of contents during transportation and storage and prevent damages, a function as a cooking container such as heat resistance, water resistance and thermal retention, and a function as tableware such as heat resistance, good lip feel and easy grasp, as well as a very excellent biodegradability.

To achieve the purpose above, in the hermetically sealed container of the present invention consisting of a biodegradable main body having a space to hold contents at the inside and an opening to take in and out the contents, and a lid mainly made of plastic to seal the opening of the main body, is characterized in that the main body includes a biodegradable expanded molded article molded in a specified shape, and a coating film attached on a surface of the biodegradable expanded molded article, said biodegradable expanded molded article being mainly made of starch or a derivative thereof and molded through steam expansion of a slurry or dough molding material prepared by adding water to the starch or the derivative thereof, said coating film being mainly made of a biodegradable plastic and having at least hydrophobicity, and that the lid is heat-sealed on a rim of the opening of the main body.

According to the arrangement above, producing the slurry or dough molding material mainly made of starch and steam-expanding this material easily allow manufacture of a highly complicatedly shaped molded article, and make the molded article have improved strength compared with a conventional molded article made of starch, since the resultant expanded molded article includes a certain amount of water. Furthermore, inasmuch as a biodegradable coating film is attached on the expanded molded article, it becomes possible to apply the coating film to the molded article in correspondence with the shape thereof easily and certainly, for instance, by thermo compression bonding using a mold identically shaped as a mold used when the expanded molded article is molded, or by simultaneously attaching the coating film at the moment of expansion molding.

Moreover, according to the arrangement above, since the molded article constituting the main body is an expanded article (expanded molded article), it has good heat resistance. In the result, for example, it is possible to prevent a problem that if hot water is poured in a space inside the main body, heat escapes outwards and hot water gets cool, or outside surface of the main body becomes too hot to grasp the container. Also, according to the arrangement above, since the molded article constituting the main body is an expanded article (expanded molded article), certain light blocking effect can be obtained. In the result, for example, in case that a food is held as the contents in the space inside the main body, it is possible to prevent deterioration of the food due to light.

The coating film is mainly made of a biodegradable plastic having similar quality to common plastics and has at least hydrophobicity. Thus the expanded molded article mainly made of starch can be water resistant simply by attaching the coating film. Moreover, extrinsic functions such as gas impermeability can be added by choosing appropriate types of biodegradable plastics and so on.

Furthermore, according to the arrangement above, since the lid is heat-sealed on the rim of the opening of the main body, it is possible to provide a hermetically sealed container having sufficient hermetical closeness and gas impermeability.

It is preferable that the lid is a film mainly made of a biodegradable plastic.

According to the arrangement above, since both main body and lid is biodegradable, it is possible to biodegrade both main body and lid without separating the lid from the main body or to biodegrade the lid together with the main body after the lid is separated form the main body, after opening the hermetically sealed container and taking out the contents therefrom. Accordingly, it is not necessary to separate the lid, thereby saving labor for disposal. In addition, inasmuch as the lid is biodegradable, the hermetically sealed container can be provided more environmentally friendly.

Furthermore, according to the arrangement above, it is possible to give moisture impermeability and gas impermeability to the lid since the lid is mainly made of plastic. Also, the lid can be easily peeled off when opening the container, because the lid is an easily bendable film.

It is preferable that the melting point of a biodegradable plastic used for both coating film and lid is not less than 130°C.

According to the arrangement above, the main body is an expanded molded container mainly made from starch (biodegradable expanded molded article) having originally very excellent heat resistance covered with the heat-resistant film (coating film). The lid is also consisted of heat-resistant materials. Both main body and lid have excellent heat resistance. Therefore, it is possible to provide a hermetically sealed container of which main body and lid can maintain sufficient strength, heat resistance, moisture resistance and moisture impermeability even when putting the contents of high temperature around 100°C into the container. Accordingly, the hermetically sealed container of the above arrangement is suitable to pour hot water, such as a ready-to-eat noodle container.

It is preferable that a biodegradable plastic having the melting point of not less than 130°C is modified polyester.

The hermetically sealed container is suitable for a food container. Namely, it is preferable that in the hermetically sealed container of the present invention, a food is included as the contents in a space inside the main body of the container. This shows significant effects that the container including any food residues can be wholly biodegraded with the food residues at the time of disposal.

Other and further objects, features and advantages of the present invention will appear more fully from the following description. Also, the merits of the present invention will be apparent from the following description taken in connection with the accompanying drawings.

### BRIEF DESCRIPTION OF THE DRAWINGS

Fig. 1 is a schematic cross-sectional view showing a shape of a bowl-shaped hermetically sealed container as an example of a hermetically sealed container of an embodiment in accordance with the present invention.

Fig. 2 is a schematic cross-sectional view showing a shape of a plate-shaped hermetically sealed container as an example of a hermetically sealed container of an embodiment in accordance with the present invention.

Fig. 3 is a schematic cross-sectional view showing a shape of a cup-shaped hermetically sealed container as an example of a hermetically sealed container of an embodiment in accordance with the present invention.

Fig. 4 (a) and fig. 4 (b) are schematic cross-sectional views showing a shape of a bowl-shaped container as an example of a main body of a biodegradable container of an embodiment in accordance with the present invention.

Fig. 5 (a) and fig. 5 (b) are schematic cross-sectional views showing a shape of a plate-shaped container as another example of a main body of a biodegradable container of an embodiment in accordance with the present invention.

Fig. 6 (a) and fig. 6 (b) are a schematic cross-sectional view and a schematic plan view showing a shape of a cup-shaped container as still another example of a main body of a biodegradable container of an embodiment in accordance with the present invention.

Fig. 7 is a graph showing a composition of a molding material used in the present invention, as measured in relation to the whole molding materials in graph (I), and a total amount of main solid matter in graph (II), and by means of a relation between a total amount of the materials and water in graph (III), and a relationship between those measurements schematically.

Fig. 8 (a) and fig. 8 (b) are schematic cross-sectional views showing an arrangement of a mold to mold an expanded molded article that is a main body of the bowl-shaped container shown in fig. 4 (a) and fig. 4 (b).

Fig. 9 (a) and fig. 9 (b) are schematic cross-sectional views showing an arrangement of a mold to mold an expanded molded article that is a main body of the plate-shaped container shown in fig. 5 (a) and fig. 5 (b).

Fig. 10 (a) and fig. 10 (b) are schematic cross-sectional views showing an example of an arrangement of a mold to mold an expanded molded article that is a main body of the cup-shaped container shown in fig. 6 (a) and fig. 6 (b).

Fig. 11 (a) and fig. 11 (b) are schematic cross-sectional views showing another example of an arrangement of a mold to mold an expanded molded article that is a main body of the cup-shaped container shown in fig. 6 (a) and fig. 6 (b).

Fig. 12 is a schematic explanatory view showing an example of an arrangement that the mold shown in fig. 8 (a) and fig. 8 (b) includes an electrode for internal heating.

Fig. 13 (a) is a schematic cross-sectional view showing a shape of the expanded molded article molded by the mold shown in fig. 8 (a) and fig. 8 (b) . Fig. 13 (b) is a schematic cross-sectional view showing a shape of the expanded molded article molded by the mold shown in fig. 9 (a) and fig. 9 (b), and fig. 13 (c) is a schematic cross-sectional view showing a shape of the expanded molded article molded by the mold shown in fig. 10 (a) and fig. 10 (b) or fig. 11 (a) and fig. 11 (b).

Fig. 14 is a schematic explanatory view describing an attaching step that a coating film is attached on the surface of the biodegradable expanded molded article shown in fig. 13 (a) by using an after attaching method.

Fig. 15 (a) is a schematic explanatory view showing an attaching state of the coating film on the surface of the biodegradable container on which the coating film is attached by using the after attaching method. Fig. 15. (b) is a schematic explanatory view showing an attaching state of the coating film on the surface of the biodegradable container on which the coating film is attached by using a simultaneous attaching method.

Fig. 16 is an explanatory view describing a case that a manufacturing method 1 is used, in the simultaneous attaching method for manufacturing the plate-shaped container shown in fig. 5 (a).

Fig. 17 is an explanatory view describing a case that a manufacturing method 2 is used, in the simultaneous attaching method for manufacturing the bowl-shaped container shown in fig. 4 (a).

Fig. 18 is an explanatory view describing a case that a manufacturing method 3 is used, in the simultaneous attaching method for manufacturing the plate-shaped container shown in fig. 5 (a).

Fig. 19 is an explanatory view describing a case that a manufacturing method 4 is used, in the simultaneous attaching method for manufacturing the bowl-shaped container shown in fig. 4 (a).

Fig. 20 (a) is a schematic plan view showing an example that the coating film is cut off in two pieces of film when the cup-shaped container shown in fig. 6 (a) is manufactured by using a manufacturing method 5. Fig. 20 (b) is a schematic plan view showing an example that the coating film is cut off in three pieces of film.

Fig. 21 is an explanatory view describing a case that a manufacturing method 5 is used, in the simultaneous attaching method for manufacturing the cup-shaped container shown in fig. 6 (a).

Fig. 22 is an explanatory view describing a case that a manufacturing method 6 is used, in the simultaneous attaching method for manufacturing the cup-shaped container shown in fig. 6 (a).

Fig. 23 is an explanatory view describing a case that a manufacturing method 7 is used, in the simultaneous attaching method for manufacturing the cup-shaped container shown in fig. 6 (a).

Fig. 24 (a) is a schematic explanatory view showing a state that a lid is adhered to the bowl-shaped container in case that that the coating film is attached on a rim of the bowl-shaped container shown in fig. 1. Fig. 24 (b) is a schematic explanatory view showing a state that the coating film is not adhered to the bowl-shaped container in case that the coating film is not attached on a rim of the bowl-shaped container.

### BEST MODE FOR CARRYING OUT THE INVENTION

An embodiment of the present invention is described below in accordance with attached drawings. By the way, the present invention is not limited to this embodiment.

A hermetically sealed container of the present invention includes a main body which has a space to include the contents at the inside and an opening to take in and out the contents, and a lid mainly made of plastic to seal the opening of the main body of the biodegradable container, wherein the lid is heat-sealed on a rim of the opening of the main body.

The main body of the biodegradable container is a biodegradable molded article including a biodegradable expanded molded article molded in a specified shape and a coating film attached on a surface of the biodegradable expanded molded article. The coating film is mainly made of biodegradable plastic and has at least hydrophobicity. The biodegradable expanded molded article is mainly made of starch or a derivative thereof and molded through steam expansion to a dough or slurry molding material which is made by adding water to the main material.

Also, in the main body of the biodegradable container above, a preferred arrangement is either:
an amount of a biodegradable plastic such as the coating film is stipulated to be steady with respect to the biodegradable expanded molded article; or a ratio of the amount of gas phase included in the biodegradable expanded molded article is stipulated,
and moreover, the coating film above preferably covers the surface of the biodegradable expanded molded article in the state that the coating film is substantially adhered to the surface. In this case, an adhesive layer may be inserted between the surface and the coating film, though it is more preferable that the coating film is directly adhered.

By the way, in the description below, the term "the biodegradable expanded molded article" may be shortened as "expanded molded article" without notice. Also, the above "slurry" state indicates a state that starch has at least sufficient fluidness when water is added to the starch. Thus the starch only needs to be suspended and does not have to be dissolved in water. Meanwhile, the above "dough" state has lower fluidness compared to the slurry state, and the material is half solidified.

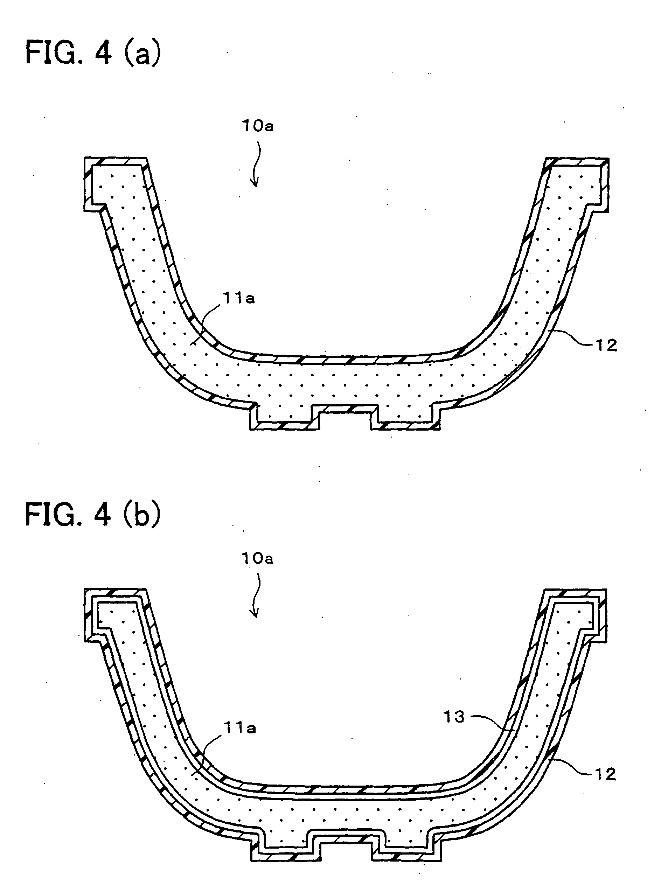

Now the main body of the biodegradable container is described. More specifically, if a bowl-shaped container is taken as an example of the main body of the biodegradable container, as fig. 4 (a) shows, the bowl-shaped container 10a includes the main body 11a of the container which is the biodegradable expanded molded article, the coating film 12 that is directly and substantially adhered to the main body 11a to cover the surface thereof. Also, as fig. 4 (b) shows, the bowl-shaped container 10a may include an adhesive layer 13 to be inserted between the coating film 12 and the main body 11a, to attach the coating film 12 to the surface of the main body 11a. By the way, as described later, the surface of the main body 11a is not necessarily to be completely covered by the coating film 12, but may be partly covered by the same.

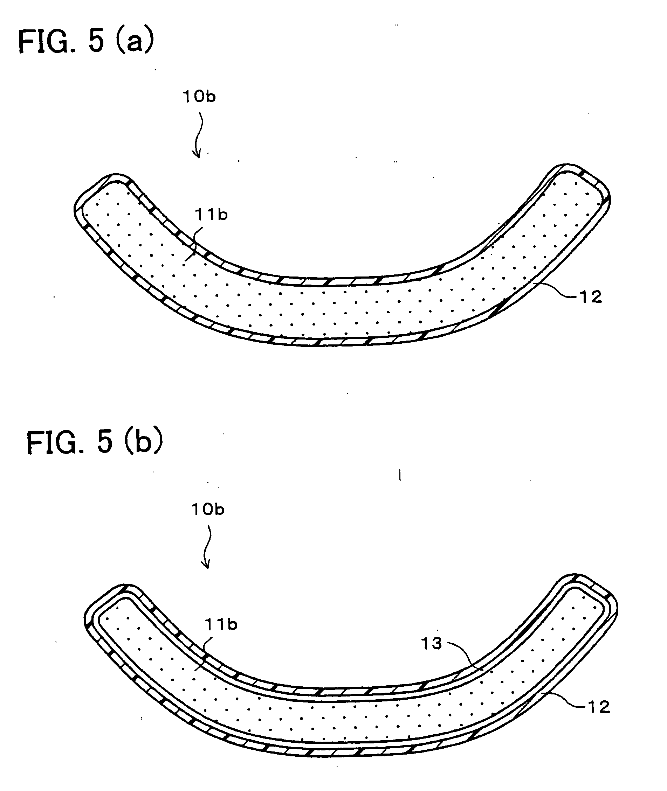

Correspondingly, if a plate-shaped container is taken as another example of the main body of the biodegradable container, the plate-shaped container 10b is also arranged either to consist of the main body 11b and the coating film 12 as fig. 5 (a) shows, or additionally to include the adhesive layer 13 between the main body 11b and the coating film 12 as fig. 5 (b) shows.

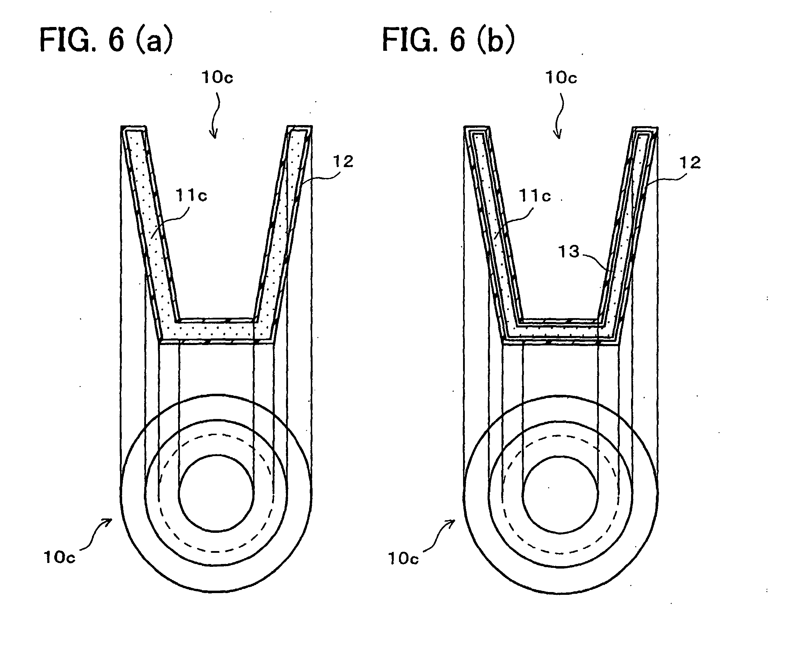

Moreover, if a cup-shaped container is taken as another example of the main body of the biodegradable container, the cup-shaped container 10c is also arranged either to include the main body 11c and the coating film 12 as fig. 6 (a) shows, or additionally to include the adhesive' layer 13 between the main body 11c and the coating film 12 as fig. 6 (b) shows. By the way, in figs. 6 (a) and (b), the upper figure is a vertical cross-sectional view of the cup-shaped container 10c and the lower figure is a plan view (a figure looking down at the cup-shaped container 10c from above) in relation to the upper figure.

The biodegradable expanded molded article, which constitutes the main body (the main bodies 11a, 11b, and 11c) of the biodegradable container, is molded from a slurry or dough molding material mainly made of starch or a derivative thereof and prepared by adding water, through steam expansion.

Starch used as the main material of the molding material is not limited to any particular type. For instance, starch easily acquired from agricultural products worldwide as major cereals, such as potato, corn, tapioca, rice, wheat, sweet potato, etc. can be preferably used. The starch above may be either produced from a particular agricultural product or a mixture of starch produced from more than one agricultural product.

Also, a derivative of the starch is a derivative that is chemically modified but still biodegradable, more specifically, such as α-starch, cross linked starch, and denatured starch. Moreover, a mixture of unmodified starch and the derivative of starch can be used. Thus in a broad sense, the starch in the present invention includes unmodified starch (starch in a narrow sense), a derivative thereof, and a mixture of these two. So, in the description below, "starch" indicates the starch in a broad sense, unless particularly noticed.

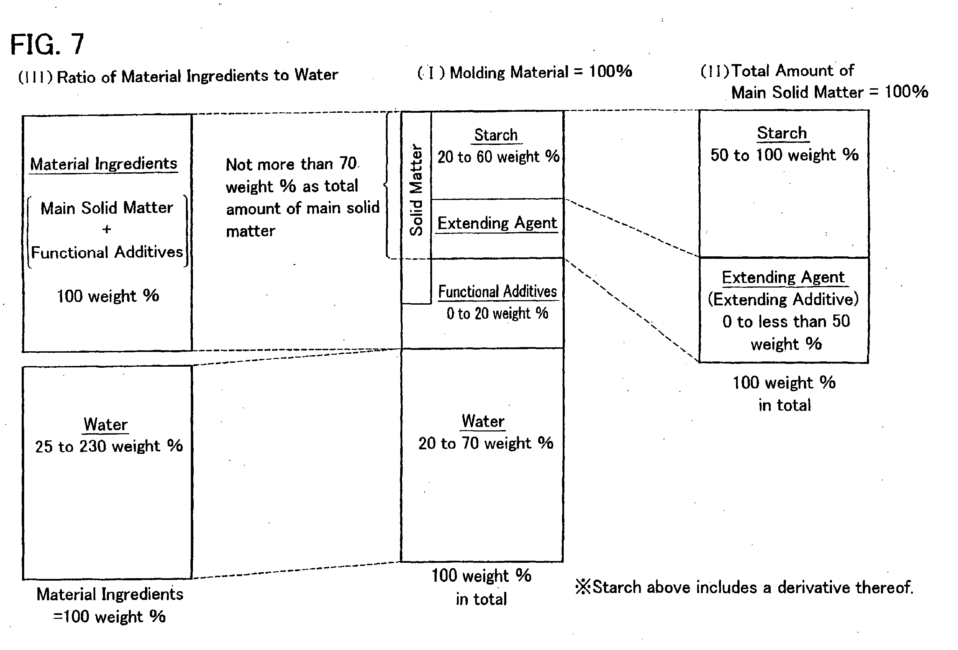

As the graph "(II) Total Amount of Main Solid Matter = 100 %" in fig. 7 shows, the percentage of starch content in the molding material is preferably within the range between 50 weight % and 100 weight %, if a total amount of the main solid matter of the molding material is taken as 100 weight %. Meanwhile, if a total amount of the molding material including water is taken as 100 weight %, as the graph "(I) Molding Material=100%" in fig. 7 indicates, the percentage of starch content is preferably within the range between 20 weight % and 60 weight %. When the starch content falls in the ranges above, the main material of the main body of the biodegradable container can be regarded as starch, so good biodegradability can be expected. By the way, the main solid matter and the total amount thereof are described later.

Apart from the above starch the molding material may include various additives. More specifically, the additives are such as an extending agent, strength adjusting agent, plasticizer, emulsifier, stabilizer, mold releasing agent, homogeneity adjusting agent, moisture retaining agent, handling adjusting agent, conductivity adjusting agent, dielectric loss adjusting agent, swelling agent, coloring agent, etc.

Some additives are beneficial in the manufacturing process, such as improving production efficiency of the main body or avoiding problems in the manufacturing process, and others are advantageous for the hermetically sealed container as a finished product, such as improving the quality of the main body of the resultant biodegradable container and cutting costs thereof. The type of these additives is not limited, unless significantly lowering the quality of the expanded molded article or the main body of the biodegradable container.

The extending agent is an additive added to the molding material to increase the bulk of the molding material and decrease the amount of starch included in the material as much as possible, to cut costs. Therefore, a substance used as the extending agent is not limited to any particular one as long as cheaper than starch, but by-products of processing and manufacturing of foods, etc. are preferably used, to dispose the wastes simultaneously.

More specifically, what can be used are:
crushed. (1) a remained juice, residue of squeezing, that are produced in food (food and drink) processing and manufacturing using vegetables and fruits such as celery, carrot, tomato, citrus fruits (mandarin orange, lemon, grapefruit, etc.), apple, grape, berries, pineapple, sugarcane, sugarpeat, etc., and mixture of thereof;
(2) by-products of a manufacturing processed foods using cereals, such as bean curd lees and tofu;
(3) sake lees, shouchu lees, beer yeast lees, wine yeast lees, etc. that are produced in processes of producing liquors such as sake, shochu, beer, wine, etc., and any mixture thereof;
(4) residues of used luxury drinks such as coffee, black tea, barley tea, green tea, oolong tea, etc., tea dregs and any mixture thereof;
(5) oil cakes remained after squeezing oil from soybean, corn, rapeseed, sesame, etc., and any mixture thereof;
(6) residues produced in a process to polish cereals such as wheat bran, rice bran, rice husks, etc., and any mixture thereof;
(7) by-products produced in a process to produce starch such as gluten meal, etc.;
(8) baking residues produced in a process of manufacturing sweets and bread such as a cone cup, biscuit, wafer, waffle, and any mixture thereof;
(9) the aforementioned by-products etc. being dried or crushed.

Furthermore, either one of the substances or any mixture thereof may be used.

The strength adjusting agent is an additive to adjust (especially enhance) the strength of the expanded molded article and the main body of the biodegradable container. Although the type of the agent is not limited to any particular substance, what are taken as the concrete examples are, for instance:
the aforementioned by-products (1) to (9) taken as the extending agents;

(10) saccharide such as glucose, dextrin, isomerized saccharide, etc., and any mixture thereof;
(11) sugar-alcohols such as sorbitol, mannitol, lactitol, etc., and any mixture thereof;
(12) fats and oils such as vegetable fat and oil, animal fat and oil, processed fat and oil made thereof, etc., and any mixture thereof;
(13) waxes such as carnauba wax, candelilla wax, bees wax, paraffin, microcrystalline wax, and any mixture thereof;
(14) thickener polysaccharide (microbe producing polysaccharide or vegetable polysaccharide, etc.) such as xanthan gum gellan gum, guar gum, locust bean gum, pectin, gum Arabic, karaya gum, tara gum, carrageenan, furcellaran, agar, alginate, and salts thereof, and any mixture thereof;
(15) chlorides of metals, such as calcium, sodium, potassium, aluminum, magnesium, and iron; sulfates, organic acid salts, carbonates, hydroxides, phosphates, and other salts of these metals; and any mixture thereof;
(16) insoluble minerals such as quartz powder, diatomaceous earth, talc, silicone, etc., and any mixture thereof;
(17) vegetable fibers and their derivatives such as cellulose, microcrystalline cellulose, paper, pulp (used pulp, virgin pulp), carboxymethyl cellulose, methyl cellulose, acetyl cellulose, etc., and any mixture thereof.
(18) structures of inorganic substances such as glass, metal, carbon, ceramic, fibers thereof, etc.
(19) natural materials such as a shell, bone powder, eggshell, leaf, wood powder, etc., and any mixture thereof;
(20) calcium carbonate, carbon, talc, titanium dioxide, silica gel, aluminum oxide, non-fiber filler, etc., and any mixture thereof;
(21) fatty acid (stearic acid, lactic acid, lauric acid, etc.), or salts such as metal salts thereof, etc., fatty acid derivatives such as acid amide, ether, etc., and any mixture thereof;
(22) other food additives such as glycerin, polyglycerin, propylene glycol, ethylene glycol, glycerin fatty acid ester, polyglycerin fatty acid ester, propylene glycol fatty acid ester, sugar ester, lecithin, sorbitan fatty acid ester, polysorbate, etc., and any mixture thereof;
(23) natural resins such as shellac, rosin, sandarac resin, gutta-percha, dammar resin, etc., and any mixture thereof;
(24) biodegradable resins such as polyvinyl alcohol and polylactic acid, etc., and any mixture thereof;
(25) acetyltributyl citrate, solution of zirconium salt, alkali solution of ammonium zirconium carbonate, and any mixture thereof. Furthermore, either one of the substances above or any mixture thereof may be used.

The plasticizer is an additive to improve fluidity of the molding material and gives flexibility to the resultant expanded molded article and the main body of the biodegradable container. Although the type of the plasticizer is not limited to any particular substance, what are taken as the concrete examples are, for instance:
the aforementioned by-products (1) to (9) taken as the extending agents;
the aforementioned compounds (10) to (21), (23) and (24) that are taken as the strength adjusting agents;

(26) acetylpolybutyl citrate, or sugar-alcohols such as glycerin, polyglycerin, propylene glycol, ethylene glycol, etc., and any mixture thereof.

Furthermore, either one of the substances above or any mixture thereof may be used.

The emulsifier is an additive to mix an oily additive adequately and emulsify the additive to be a oil-drop-in-water shape, provided that the oily additive is added to the molding material. Although the type of the emulsifier is not limited to any particular substance, what are taken as the concrete examples are, for instance:
(27) surface active agents such as glycerin acid ester, polyglycerin acid ester, propylene glycol fatty acid ester, sugar ester, sorbitan acid ester, lecithin, polysorbate, etc., and any mixture thereof.

The stabilizer is an additive to stabilize the state of the prepared molding material. Although the type of the stabilizer is not limited to any particular substance, what are taken as the concrete examples are, for instance:
starch (in a narrow sense, not modified) as the main material and a derivative thereof; and
the substances taken as the strength adjusting agents such as (10) saccharide, (11) sugar alcohol, (14) thickener polysaccharide, (17) vegetable fibers and a derivative thereof (except paper), and (21) fatty acid, fatty acid salts, and a derivative of fatty acid etc.

Either one of the substances above and any mixture thereof may be used.

The mold releasing agent is an additive to easily release the expanded molded article from the mold after molding and also make the surface of the expanded molded article as smooth as possible. Although the mold releasing agent is not limited to any particular type, what are taken as the concrete examples are, for instance, the substances taken as the strength adjusting agents, such as (12) fats and oils, (13) waxes, (14) thickener polysaccharide, (21) fatty acid, fatty acid salts, and a derivative of fatty acid, etc.

Either one of the substances above or any mixture thereof may be used.

The homogeneity adjusting agent is an additive to make homogeneity in the slurry/dough molding material, that is, "grain" (in this case, grain, etc. of a solid matter in the slurry/dough material) of the slurry/dough molding material as fine, smooth and homogeneous as possible. Although the homogeneity adjusting agent is not limited to any particular type, what are taken as the concrete examples are, for instance:
starch (in a narrow sense, not modified) as the main material, and the derivative thereof;
the aforementioned by-products (1) to (9) taken as the extending agents;
the aforementioned components (10) to (25) taken as the strength adjusting agents.

Furthermore, either one of the substances above and any mixture thereof may be used.

The moisture retaining agent makes the expanded molded article contain a certain amount of water, and has the same effect as the plasticizer. That is to say, if the expanded molded article mainly made of starch includes a certain amount of water (if moisture is retained), while brittleness of α-starch is decreased, strength and flexibility thereof are improved. Thus the moisture retaining agent can be used as a plasticizer and a strength adjusting agent as well.

The type of the moisture retaining agent is not limited to any particular substance either. What are taken as the concrete examples are, for instance:
the starch (in a narrow sense, not modified) as the main material and the derivative thereof;
the aforementioned by-products (1) to (9) taken as the extending agents; and
the substances taken as the strength adjusting agents such as (10) saccharide, (11) sugar alcohol, (12) fats and oils, (13) waxes, (14) thickener polysaccharide, (15) metallic salts, (17) vegetable fibers and their derivatives, (19) natural materials such as a shell, bone powder, eggshell, leaf, wood powder, etc., and (22) food additives.

Furthermore, either one of the substances above or any mixture thereof may be used.

The handling adjusting agent works as a slurry adjusting agent and an additive to improve handling of the slurry/dough molding material. Although the handling adjusting agent is not limited to any particular substance, all materials and compounds taken as the plasticizer, emulsifier, and stabilizer can be used. Either one of the substances above or any mixture thereof may be used.

The conductivity adjusting agent is an additive to adjust dielectric constant of the molding material, which is one of the factors to control the heating state in case of internal heating as described later, especially in case of heat molding using the internal heat generated by electric heating, when the expanded molded article is molded. Although the conductivity adjusting agent is not limited to any particular type, what are taken as the concrete examples are, for instance:
(12) fats and oils; (13) waxes; (14) thickener polysaccharide; and (15) metallic salts that are taken as the above strength adjusting agents; and (28) water soluble electrolytes such as salts, acid, alkali, alcohol, etc.

Either one of the substances above or any mixture thereof may be used.

The dielectric loss adjusting agent is an additive to adjust a dielectric loss of the molding material, which is one of the factors to control the heating state especially in case of heat molding using the internal heat generated by high frequency dielectric heating, when the expanded molded article is molded. Although the dielectric loss adjusting agent is not limited to any particular, what are taken as the concrete examples are, for instance:
the substances that are taken as the strength adjusting agents such as (12) fats and oils; (13) waxes; (15) metallic salts; (16) insoluble minerals; and (17) vegetable fibers and their derivatives;
the substance taken as the dielectric constant adjusting agent such as (28) water soluble electrolytes; and (29) compounds including zirconium salt such as zirconium salt, solution of ammonium zirconium carbonate, etc., and any mixture thereof.

Either one of the substances above or any mixture thereof may be used.

The swelling agent is an additive to adjust the degree of expansion of the molding material and to further help swelling to form the expanded molded article having an appropriate shape for the use. Although the swelling agent is not limited to any particular substance, what are taken as the concrete examples are, for instance:
(30) organic swelling agents such as benzenesulfonyl hydrazine compounds, azonitryl compounds, nitroso compounds, diazo acetamide compounds, azocarboxylic acid compounds, etc. and formulations including these agents;
(31) ammoniacal swelling agents such as espata, etc. and formulations including these agents;
(32) inorganic swelling agents such as sodium bicarbonate, ammonium alum hydrogen tartaric acid, magnesium carbonate, etc. and formulations including these agents.

Either one of the substances above and any mixture thereof may be used.

The coloring agent is an additive to color the whole expanded molded article. Although the coloring agent is not limited to any particular substance, what are taken as the concrete examples are, for instance:
(33) inorganic pigments such as titanium dioxide and carbon black, etc.;
(34) natural or synthetic organic dyes such as colorants specified by a color index;
(35) colorants made of natural materials such as caramel, cacao powder, etc.

Either one of the substances above or any mixture thereof may be used.

As an additive contained in the above molding material, titanium dioxide is preferable as the additive since it has an excellent light blocking effect and a fine white color to show off a beautiful presentation in printing on the surface and can improve strength and gas impermeability. To fulfill these functions of titanium dioxide sufficiently, content thereof in the molding material is preferably not less than 0.2 weight %, more preferably not less than 0.3 weight % and still more preferably not less than 0.4 weight %.

Among the additives in the molding material, it is preferable that the content of the extending agent (that may be termed as an extending additive) is not more than starch contained in the main solid matter of the molding material.

Namely, the extending additive (extending agent) are not necessarily contained, however, it is preferable that the content of the extending additive is the same as that of starch at the maximum, to reduce cost of raw materials of the main body in accordance with the present invention, or to effectively use wastes. The starch as the main ingredient and the extending agent as the extending additive are integrally termed main solid matter.

By the way, in the main solid matter, if the extending additive is contained more than starch, the starch is not substantially the main ingredient of the resultant main body of the biodegradable container. This should be avoided since the quality of the main body of the biodegradable container is degraded. Also, the starch and the extending agent are integrally termed as "main solid matter", because "solid matter" included in the molding material includes solid matter of functional additives (see a graph "(I) Molding Material = 100 %" in fig.7).

Namely, in the present invention, as the graph "(II) Total Amount of Main Solid Matter = 100 %" in fig. 7 indicates, assuming that the total amount of the main solid matter (starch and extending agent) is taken as 100 weight %, the content of starch (including the derivatives) is within the range between 50 weight % and 100 weight %, while the content of extending agent is within the range between 0 weight % and 50 weight % (0 - less than 50 weight % in the figure).

Also, as indicated next to the graph "(I) Molding Material = 100 %" in fig. 7, it is preferable that the total amount of main solid matter is not more than 70 weight % assuming that the molding material including water is taken as 100 weight %.

Furthermore, among the additives included in the molding material, as the graph "(I)Molding Material=100%" in fig. 7 shows, the content of each additive (termed as functional additives) except that the extending agent (extending additive) is preferably within the range between 0 weight % and 25 weight %, and more preferably between 0 weight % and 20 weight %, assuming that the whole molding material including water is taken as 100 weight %. Also, an amount of the functional additives when the total amount of the main solid matter is taken as 100 weight %, i.e. an amount of the functional additives with respect to the total amount of the main solid matter is not particularly limited, as long as the amount thereof in the molding material falls in the range as above.

In other words, as is the case of the extending agent, the functional additives are not necessarily contained in the molding material. However, it is preferable if the content of additives is not more than 25 weight % out of 100 weight % of the molding material, to improve performance of the main body of the biodegradable container in accordance with the present invention. By the way, it is not desirable that the content of the functional additives is more than 25 weight %, because the additives cannot deliver the expected performance in accordance with the content thereof, and moreover, the performance of the main body of the biodegradable container may be degraded in some cases.

Provided that the main solid matter (the starch as the main material and the extending agent) and the functional additives are collectively termed material ingredients, the molding material used in the present invention further includes water. In this case, the type of water is not particularly limited as long as industrial water is used.

As shown in the graph "(I) Molding Material = 100 %" in fig. 7, when water is added to the molding material, the content of water in the molding material should be within the range between 20 weight % and 70 weight %, preferably between 25 weight % and 55 weight %, assuming that the molding material is taken as 100 weight %.

In other words, as the graph "(III) Ratio of Material Ingredients to Water" in fig. 7 shows, provided that the total amount of the material ingredients (main solid matter and functional additives) of the molding material is taken as 100 weight %, the amount of water added is within the range between 25 weight % and 230 weight %, preferably between 33 weight % and 120 weight %. When the content of the water is within the above range, the molding material is in slurry/dough state.

On the one hand, if the content of water in the molding material is less than 20 weight %, the molding material is scarcely fluid because of too small water content, which is not preferable in terms of molding. On the other hand, if the content of water is more than 70 weight %, the content of the solid matter in the molding material becomes too low because of too large water content, which is not preferable in terms of molding.

When the molding material is in slurry/dough state, moldability is improved since it becomes easy to make the molding material fill a cavity of the mold, as described later. It also becomes possible to make the expanded molded article after molding contain a certain amount of water, and flexibility of the expanded molded article can be improved, as described later.

By the way, along with the main material, additives, and water that are described above, the molding material may include other additives. The ingredients are determined in accordance with functions to be added to the main body of the biodegradable container, and hence not particularly limited to any additive.

Furthermore, slurry/dough state in this embodiment is just categorized in accordance with fluidity of the molding material for the sake of convenience. Thus the categorization is nothing to do with the content of water. For instance, assuming that a molding material containing a certain amount of water is in slurry state, the molding material may be transformed to dough form if the content of a stabilizer, a water-absorbing extending agent such as bean curd lees, or pulp, etc. are increased. Similarly, when a binding agent such as protein is added to the molding material, the material sometimes loses a certain degree of fluidity and may be transformed to dough state.

The expanded molded article is molded by using the molding material, as described above. As for the molding method, there is a method to use a mold including a cavity matched with a shape of a desired molded article and consisting at least two parts. The expanded molded article is molded by heating and pressurizing the molding material charged into the cavity of the mold.

One of the arrangements of the mold is that at least two metal parts capable of being detached for removing the expanded molded article after molding article are included.

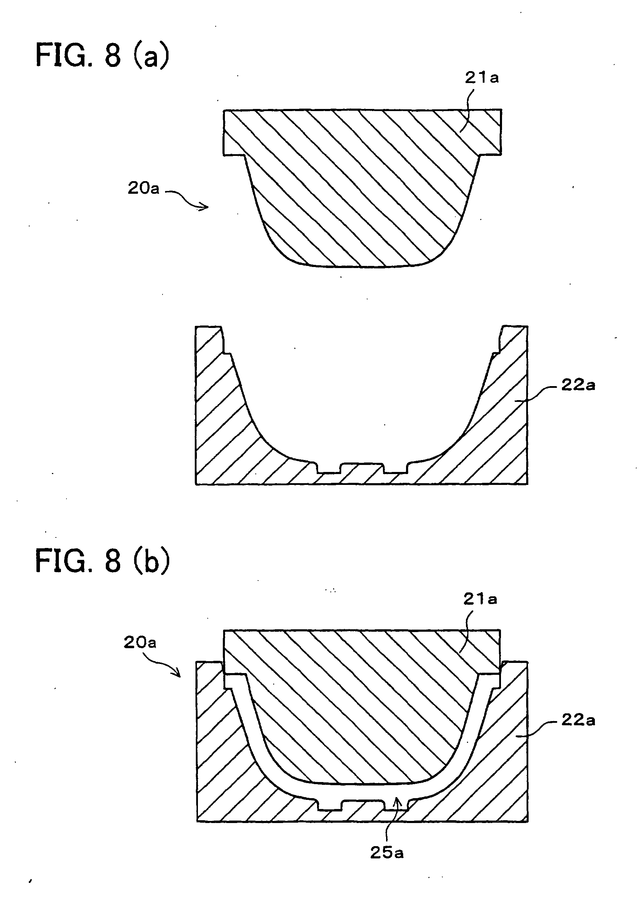

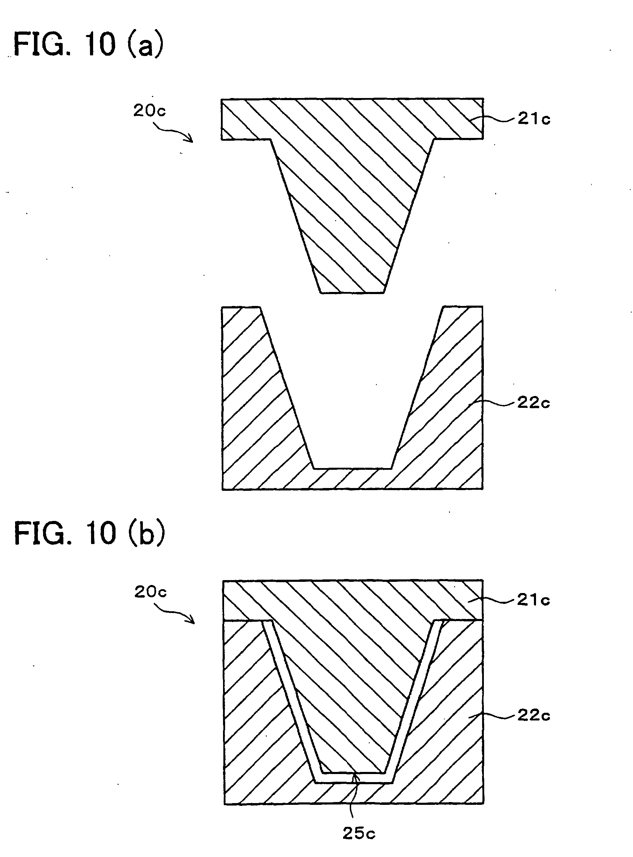

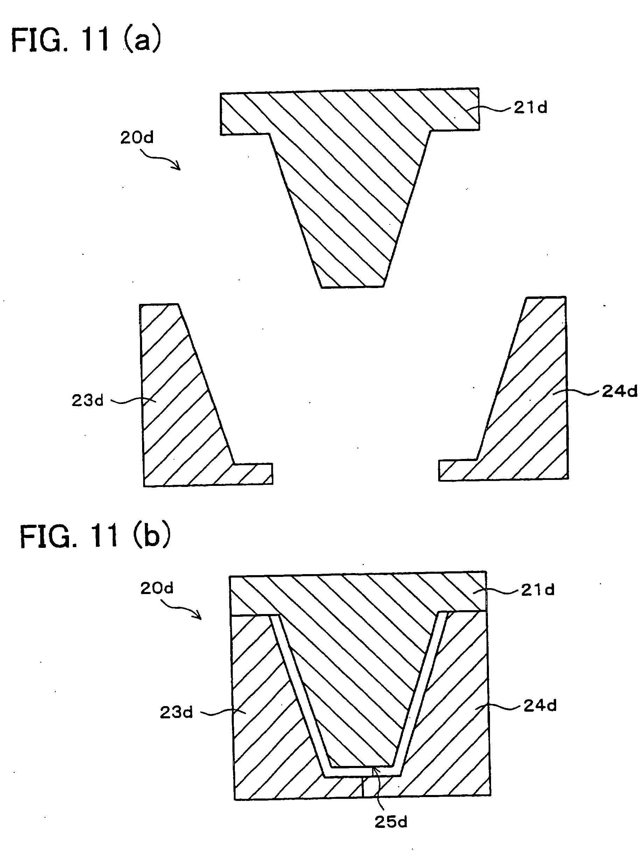

More specifically, what are taken as the examples are molds shown in figs. 8 (a), 9 (a) and 10 (a) such as a metal mold 20a including upper and lower metal parts 21a and 22a, a metal mold 20b including parts 21b and 22b, and a metal mold 20c including parts 21c and 22c, and a metal mold 20d shown in fig. 11 (a) including an upper part 21d having the same shape as the part 21c and lower parts 23d and 24d having the same shape as the lower part 22c being split in two.

That is to say, the mold used in the present invention has to include dividable multiple parts but the style of splitting (i.e. the number of parts) is not particularly limited, since the style depends on the shape of the expanded molded article.

For instance, for the bowl-shaped container 10a and the plate-shaped container 10b, as the metal molds 20a and 20b, the molds split in two, i.e. the upper and lower parts, are preferably used, since these two containers are large in horizontal dimensions. In the meantime, for the cup-shaped container 10c, the metal mold 20c which is split in two (the upper and lower parts) as the metal molds 20a and 20b, is possibly used. However, a three-way split mold such as the metal mold 20d is more suitable than the two-way types such as the metal mold 20c, since the container 10c is taller than the containers 10a and 10b.

As shown in figs. 8 (b), 9 (b), and 10 (b), cavities 25a, 25b, and 25c matched with the shapes of desired expanded molded articles (see figs. 4(a), 4 (b), 5 (a), 5 (b), 6 (a) and 6 (b)) are formed in the metal molds 20a, 20b and 20c, when the upper parts 21a, 21b, and 21c are joined with the lower parts 22a, 22b, and 22c. Similarly, as fig. 11 (b) shows, a cavity 25d is formed in the metal mold 20d, when the parts 21d, 23d, and 24d are joined.

Moreover, although not illustrated, the metal molds 20a, 20b, 20c, and 20d may include a knockout pin for removing the expanded molded article and a hinge, guide, bar, etc., for movably connecting the parts 21a to 21d, 22a to 22c, 23d, and 24d.

Furthermore, in this embodiment, although the metal molds 20a, 20b, 20c and 20d are taken as examples of the mold, various conventional molds can be used and an appropriately shaped mold can be selected in accordance with a shape of the expanded molded article.

However, as described later, the mold used in the present invention requires heat resistance for the steam expansion molding, and at the same time, strength and abrasion resistance are also necessary. Furthermore, microwave permeability is required if internal heating is conducted by using microwave. Therefore, molds made of resin or ceramic having microwave permeability, heat resistance, strength, and abrasion resistance are preferably used when the internal heat is generated by using microwave, but otherwise a metal mold is more suitable because the mold itself performs as a part of an electrode in the case of internal heating by using electric conduction or high frequency dielectric heating that are described later.

As for the heating method for the above molding, what can be used are:
external heating by direct heating means that the mold is directly heated, such as direct heat, far-infrared radiation, electric heater, IH device, etc.; or
internal heating by internal heating means that the internal molding material itself is heated, such as electric conductive heating, high frequency dielectric heating, microwave heating, etc.

In the case of the external heating, the mold (metal mold 20a etc.) is directly heated by the direct heating means above. On this account, external heating is performed on the molding material in the cavity (cavity 25a etc.) by the mold, and the expanded molded article is molded through the steam expansion of the molding material.

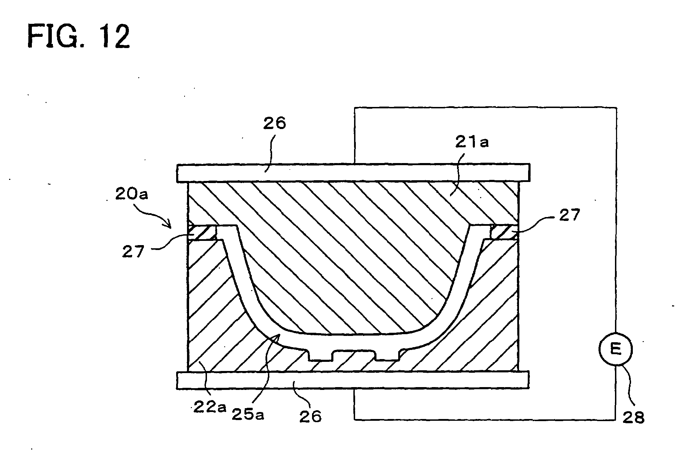

In the meantime, a mold having the same shape as that for the external heating can be also used for the internal heating. So if the metal mold 20a is taken as the example, as fig. 12 schematically shows, when the parts 21a and 22a are paired, the mold is possibly arranged so that:
each of the parts 21a and 22a is connected to an individual electrode 26 and 26, respectively;
an insulator 27 is provided at contacts between the parts 21a and 22a; and
the electrodes 26 and 26 are connected to a power supply 28.
On this account, it becomes possible to internally heat the molding material charged in the cavity 25a. By the way, apart from the power supply 28, the electrode 26 is connected to an unillustrated switch, control circuit, etc.

It is also possible to apply the arrangement for the external heating in which the electrode 26 is connected either to the part 21a or the part 22a. That is to say, the arrangement including the direct heating means and the electrode 26 can be also used to heat the mold directly, in case of the external heating. Thus the arrangement shown in fig. 12, in which the electrode 26 is provided, can be used for both internal and external heating.

Although a heating temperature of the heat molding is not particularly limited, it is preferable that the mold is heated within the range between 140°C and 240°C, in case of external heating. When the heating temperature of the mold falls within the range above, the slurry or dough molding material in the cavity (cavity 25a etc.) is properly heated and the molded article as solid matter can be acquired. Also, in the above range of heating temperature, water contained in the molding material is surely vaporized and bubbles are formed because' the boiling point of water is more than 100°C. Thus the expanded molded article can be easily acquired, since the acquired molded article always achieves steam expansion.

In the meantime, a heating temperature in case of the internal heating is not particularly limited as long as the heating temperature is within a range at which the steam expansion happens to the molding material, since the molding material itself in the cavity (cavity 25a etc.) is internally heated by applying low frequency alternating voltage or high frequency electric field to the electrode 26, and the heating temperature depends on conditions relating to the internal heating.

More specifically, characteristics of the electrode 26, a level of the low frequency alternating voltage, and strength of the high frequency electric field are deeply related to the determination of the conditions. Simultaneously, as described above, conductivity and dielectric loss of the molding material are also deeply related, since the heating condition depends on conductivity of the molding material when the molding material is heated and molded through electric heating, and the heat condition depends on dielectric loss of the molding material, when the molding material is heated and molded through high frequency dielectric heating.

Practically, the range of the conditions above are not specifically limited, as long as the temperature in the cavity is within the range of the temperature in case of the external heating.

The heating time should be appropriately set depending on heating temperature or shape and thickness, etc. of the expanded molded article. It is however preferable if the water content of the expanded molded article after molding falls at least within a specified range. In other words, it is favorable to set the heating time so that water in the molding material is not almost completely vaporized during the heating time.

When the amount of water in the molding material is less than the specified range of water content (described later) due to long heating time, the expanded molded article is excessively expanded and cannot contain the specified amount of water. In result, the expanded molded article becomes hard and brittle and the quality is deteriorated.

The heating time is not specifically limited. For instance, it is possible to mold the expanded molded article in a much shorter time through the high frequency dielectric heating comparing to a conventional external heating. The heating time tends to be longer when a thick expanded molded article is molded. Thus basically the heating time is appropriately determined depending on heating method and shape of the expanded molded article, though in general, it is preferable that the heating time falls within the range between 10 second and 5 minutes.

Pressure applied in the process of heat molding is not particularly limited as well. However, generally, it is preferred if pressure is within the range between 5kg/cm² and 50kg/m². Of course, this molding pressure is variable depending on the conditions.

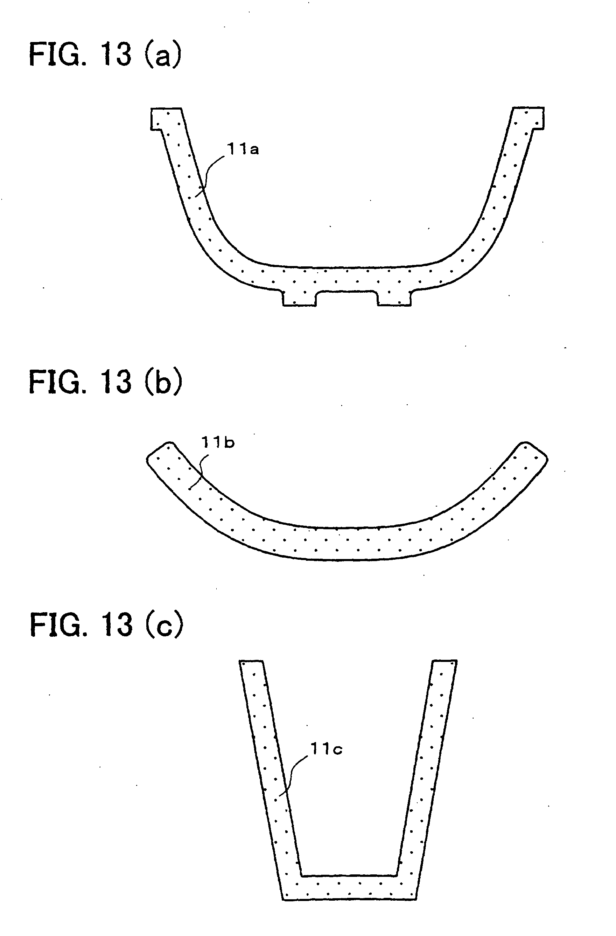

By heating and pressurizing the molding material in the cavities 25a, 25b, 25c and 25d with the metal molds 20a, 20b, 20c, and 20d, respectively, as figs. 13 (a), (b), and (c) indicate, the main body 11a of the bowl-shaped container, the main body 11b of the plate-shaped container, and the main body 11c of the cup-shaped container are acquired as the expanded molded articles. A final water content in the expanded molded articles after molding falls within the range between 3 weight % and 20 weight %, more preferably within the range between 3 weight % and 15 weight %.

On the one hand, it is undesirable that the final water content is less than 3 weight %, because excessively low water content renders the expanded molded article hard and brittle and flexibility thereof is reduced. On the other hand, it is also undesirable that the water content is more than 20 weight %, because excessively high water content renders the expanded molded article unnecessarily moist so that the weight thereof increases and attaching and adhering the coating film 12 become difficult.

As described in the description of the moisture retaining agent, the use of the molded article is very limited due to the hardness and brittleness of the same, when starch is simply transformed to α-starch. Thus, in the present invention, it is possible to set water content of the resultant expanded molded article within the range as above by simply molding the same, since enough water is contained in the molding material in slurry or dough state. By the way, sometimes the water content goes a little out of the above range depending on molding conditions and other environmental conditions. In this case, the water content is adjustable by leaving the expanded molded article in a warehouse under a fixed level of humidity for a certain period of time, spraying water to the same, and inversely leaving the same in a dry warehouse for a fixed period of time.

In the main body of the biodegradable container, the coating film 12 made of biodegradable plastics is attached to the surface of the expanded molded article (the main body 11a, etc.). Attaching the coating film 12 having at least hydrophobicity to the expanded molded article can impart at least water resistance to the same. Also, it is more preferable if the coating film 12 further imparts gas impermeability, heat insulation, abrasion resistance, improved strength, and flexibility to the expanded molded article.

More specifically, when the hermetically sealed container in accordance with the present invention is used for a highly hermetic storage container, a gas impermeable coating film 12 is highly preferable, since oxidation of, and moisture absorption by, the contents inside the container must be avoided.

Moreover, when the hermetically sealed container of the present invention is used for a container of ready-to-eat noodles, the coating film 12 with high heat resistance is preferably arranged, since deformation and melting of the main body of the biodegradable container by heat of the contents inside the container must be avoided. More specifically, the softening point of the coating film 12 is preferably not less than 130°C, and more preferably not less than 150°C. Also, the melting point of the coating film 12 is preferably not less than 170°C, and more preferably not less than 200°C. Furthermore, it is especially preferable the softening point thereof is not less than 130°C and at the same time the melting point is not less than 170°C. It is the most preferable that the softening point thereof is not less than 150°C and at the same time the melting point is not less than 200°C. On this account, deformation and melting of the main body of the biodegradable container by heat of the contents inside the container can be avoided.

The material of the coating film 12 is not specifically limited as long as it is biodegradable and can impart water resistance and preferably gas impermeability to the expanded molded article after the film 12 is attached to the surface thereof.

More specifically, what are used as the materials are those conventionally known as biodegradable plastics such as 3-hydroxybutyric acid-3-hydroxyvaleric acid copolymer, poly-p-hydroxybenzaldehyde (PHB), polybutylene succinate (PBS), polycaprolactone (PLC), acetylcellulose (PH) polymer, polyethylene succinate (PESu), polyester amide, modified polyester, polylactic acid (PLA), Mater-Bi (trademark of Novamont, Italy: having starch as the major ingredient and biodegradable polyvinyl alcohol resin and aliphatic polyester resin as the minor ingredients), cellulose, and chitosan composite, etc. Either one of the materials above or any mixture thereof may be used. Also, accessory materials such as a biodegradable plasticizer, filler, etc. may be added to the biodegradable plastics.

It is preferable that the material of the coating film 12 is modified polyester because of its excellent gas impermeability, moisture impermeability, and heat resistance. Also, it is preferable the coating film 12 is biaxially stretched biodegradable film because of its excellent strength, heat resistance, and gas impermeability. Therefore, biaxially stretched modified polyester is the most preferable for the coating film 12.

Furthermore, the coating film 12 may be produced by adding starch to the materials (biodegradable plastics) above. In this case, although a mixing ratio between the biodegradable plastic and starch is not particularly limited as long as functions of the coating film 12 such as hydrophobicity are not impaired; for instance, what is preferable is more or less 1:1 mixing ratio by weight.

In addition, additives may be added to the coating film 12. More specifically, although the additives are not particularly limited to specific types, what are able to be added are coloring agents, additives capable of improving water resistance, gas impermeability, etc., additives improving qualities in relation to softening when the coating film 12 is attached, etc.

Although the thickness of the coating film 12 (thickness of the film) is not particularly limited, it is preferred if the thickness of the film or sheet before attached to the expanded molded article falls within a range between 0.01mm and a few millimeters.

As described later, the coating film 12 becomes thinner, below the range above after attached to the surface of the expanded molded article, since the coating film 12 is heated and softened when attached. The thickness of the coating film 12 after attached is not particularly limited if it is set at an appropriate thickness to guarantee water resistance and gas impermeability, etc. depending on the type of biodegradable plastics used as the materials. However, preferably the maximum thickness is not more than 80µm, and more preferably not more than 50µm. The lower limit may be the thickness enough to exert water resistance and gas impermeability, etc. but it is desirable the thickness is not less than 5µm in general.

The expanded molded article preferably accounts for not less than 60 weight % of the total weight of the main body of the biodegradable container. In other words, the biodegradable plastics preferably account for at least less than 40 weight % of the total weight of the main body.

As described above, the speed of biodegradation of biodegradable plastics is slower than that of starch. More specifically, if the speed of biodegradation of the expanded molded article mainly made of starch is taken as 1, the speed of biodegradation of the biodegradable plastics having the same weight can be generally considered within the range of some tenths to around a fourteenth though it greatly depends on the type and shape of the biodegradable plastics.

Therefore, if biodegradable plastics are excessively contained in the main body of the biodegradable container, biodegradability of the main body of the biodegradable container becomes poor on the whole, even if the biodegradable plastics have biodegradability. Thus it is highly preferable to stipulate the maximum amount of the biodegradable plastics in the total weight.

So, in the main body of the biodegradable container, biodegradable plastics are always used for the coating film 12 and may be used as an adhesive (adhesive layer 13) that is described later. Thus to stipulate the maximum amount of the biodegradable plastics is equivalent to stipulate the maximum amount of the coating film 12 and the adhesive layer 13.

However, the adhesive 13 does not always have to be used (for instance, the bowl-shaped container 10a shown in fig. 4 (a)), and moreover, as described later, non-plastic natural materials such as starch can be used as the adhesive layer 13. So in the biodegradable molded article in accordance with the present invention, the amount of the biodegradable plastics is stipulated by stipulating the amount of the expanded molded article mainly made of starch.

In the main body of the biodegradable container, the biodegradable plastics are easily biodegraded since the coating film 12 and the adhesive layer 13 are shaped as a film. Taking this into account, as described above, the maximum weight of the biodegradable plastic (coating film 12 and adhesive layer 13) in the main body of the biodegradable container of the present invention is stipulated as less than 40 weight %, when the weight of the expanded molded article is stipulated as not less than 60 weight %. As a result, biodegradability of the biodegradable plastics and that of the expanded molded article are well-balanced, so biodegradability of the main body of the biodegradable container is further improved.

Very good biodegradability can be acquired on the whole, especially since the expanded molded article, having good biodegradability for its expanded structure, lessen the content of the coating film 12 and the adhesive layer 13. Thus when the hermetically sealed container of the present invention is used as a food container etc., the main body of the biodegradable container can be composted together with residues of the food without causing any problem.

The weight of the expanded molded article preferably accounts for not less than 60 weight % of the total weight of the main body of the biodegradable container. That is to say, the biodegradable plastics preferably account for at least less than 40 weight % of the total weight of the main body of the biodegradable container.

In the present invention, there are two arrangements in which the coating film 12 is attached in accordance with a difference of the manufacturing method of the main body of the biodegradable container. In the first arrangement, the coating film 12 is directly attached on the expanded molded article (for instance, see fig. 4 (a)), and in the second arrangement the film is attached with the adhesive layer 13 in between (for instance, see fig. 4 (b)). In the latter arrangement, an adhesive is required for attaching the coating film 12.

Although the adhesive is not particularly limited as long as it has biodegradability and can also attach the coating film 12 to the expanded molded article, specific examples of the adhesive are such as natural glues and binding agents mainly made of starch, protein, or these natural substances mixed with PVA (polyvinyl alcohol), aqueous adhesives, protein refractory/insoluble in water and congealed due to thermal metamorphism, biodegradable plastics (generally synthetic product) having a low melting point and being able to be melted below the melting point of the coating film 12, adhesives having the low melting point such as a mixture of any aforementioned substances, and thermosetting adhesives having fluidity at room temperature.

The aqueous adhesives have the advantage of very high level of biodegradability and safety, since they are mainly naturally occurring substances and basically made of starch, etc. as in the case of the expanded molded article. The use of the aqueous adhesives is not particularly limited. In general, the coating film 12 is attached after the adhesive is put on the surface of the expanded molded article with a brush or inversely the adhesive is put on the surface of the coating film 12, before the film 12 is attached on the surface of the expanded molded article.

The biodegradable plastics (generally synthetic product) having the low melting point and being able to be melted below the melting point of the coating film 12, and a mixture thereof can also be used as the adhesive with the low melting point. In other words, among the biodegradable plastics taken as the concrete examples of the coating film 12, a plastic having the lower melting point than that of the biodegradable plastic used for the outermost layer of the coating film 12, more specifically, melted either at temperature lower than the softening point of the coating film 12 or within the range between the softening point of the coating film 12 and the melting point of the coating film 12, can be selected accordingly.

For instance, when a film mainly made of polylactic acid, modified polyester and the like are used as the coating film 12, since the melting points of these substances are within the range between 80°C and 100°C, polycaprolactone whose melting point is within the range between 60°C and 70°C is preferably used as the adhesive of the low melting point.

The biodegradable plastics of the low melting point are generally used in film-shape. That is, the biodegradable plastics of the low melting point are highly suitable for use as an adhesive film. As described later, the coating film 12 is heated, pressure-pressed and attached on the expanded molded article by using the attaching mold. So if the adhesive film made of the biodegradable plastics of the low melting point is placed between the coating film 12 and the expanded molded article, the biodegradable plastics of the low melting point is melted by heat and pressure pressing and the adhesive works well.

As the adhesive used in the present invention including the aqueous adhesive and the biodegradable plastics having the low melting point, adhesives that do not include a volatile organic solvent are suitable. The organic solvent is unfavorable because, if the same is used, a device to prevent volatilization and diffusion, etc. of the organic solvent has to be provided and thus the manufacturing facilities have to be upsized.

Now, a manufacturing method of the main body of the biodegradable container is described.

There are two methods of manufacturing the main body of the biodegradable molded articles. The first one is a method that after a molding material is molded in a specifically-shaped expanded molded article through steam expansion, a coating film is attached (termed as after attaching method) . The second one is a method that molding a molding material through steam expansion and attaching a coating film are done at the same time (termed as simultaneous attaching method).

First, the after attaching method is described. This method includes at least two steps of:
molding a specifically-shaped expanded molded article (such as the main bodies 11a, 11b, 11c, etc.) from the molding material through steam expansion; and
compress-bonding and attaching the coating film 12 on the surface of the expanded molded article after the coating film 12 is heated and softened.
The main body of the biodegradable molded article acquired by using this method are arranged to have the adhesive layer 13 between the coating film 12 and the expanded molded article (the main bodies 11a, 11b and 11c), as shown in figs. 4 (b), 5 (b), 6 (b), etc.

On this account, the main body of the biodegradable container with a water content that gives enough strength to the same and arranged so that the coating film 12 is steadily attached on the main body (expanded molded article) containing a stable water content can be acquired.

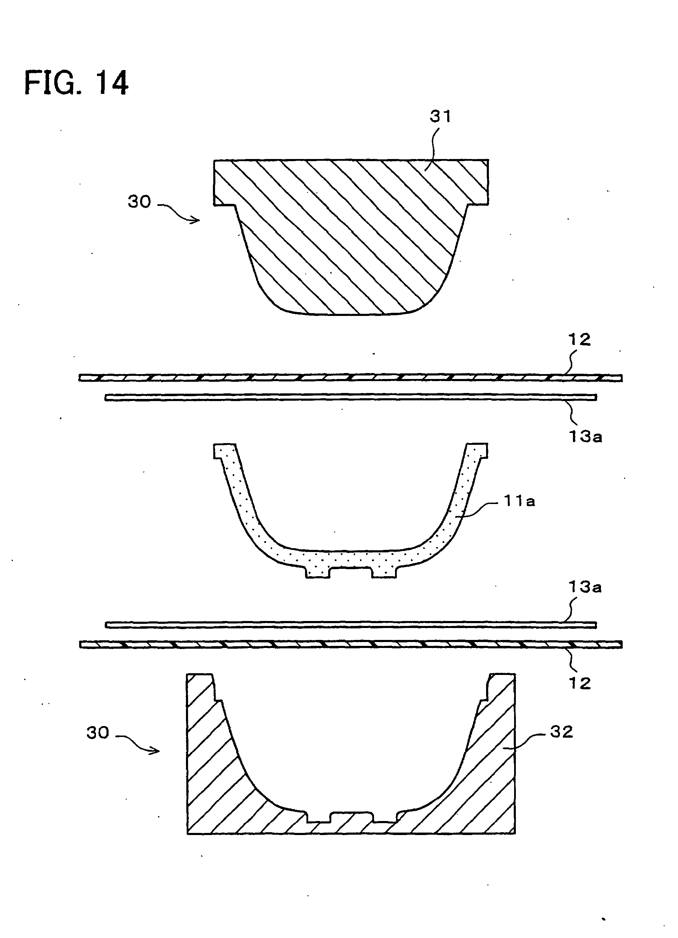

So, when the coating film 12 is attached, an attaching mold, having substantially identical shape as that of the mold (metal mold 20a, etc.) for molding the expanded molded article is used. For instance, as shown in fig. 14, a mold 30 having substantially identical shape as that of the metal mold 20a is used, when the coating film 12 is attached on the main body 11a to produce the' bowl-shaped container 10a.

The shape of the attaching mold does not have to be completely matched with the outside shape of the expanded molded article, as long as being capable of guiding the coating film 12 to be attached on the surface of the expanded molded article adequately. So, generally a copy of the mold of the expanded molded article is used. On this account, it becomes possible to produce the attaching mold at low cost and to attach the coating film 12 certainly and easily, even on a complicatedly shaped expanded molded article. As a result, this allows to manufacture the main body of the biodegradable container in simpler procedure.

The shape of the attaching mold is not particularly limited as long as the attaching mold has substantially identically shaped cavity as that of the mold. However, if two layers of films, that is, the coating film 12 and the adhesive film, are attached, the heating means is provided as in the case of the mold, to melt the adhesive film with certainty. Thus, for instance, it is possible to use the metal mold 20a without any modification as the attaching mold, shown in figs. 8 (a), 8 (b), or 12, to attaching the film 12, when the bowl-shaped container 10a is manufactured.

Concrete example of the attaching method is described. first of all, as shown in fig. 14, the main body 11a of the bowl-shaped container, which is an expanded molded article, is arranged with respect to the mold 30, and also the coating film 12 is arranged on a part of the mold 30 corresponding to the surface of the main body 11a where the coating film 12 is to be attached.

Fig. 14 shows an example to attach the coating film 12 on the whole expanded molded article. On a lower part 32 constituting the mold 30, the coating film 12 is arranged. On the film 12, the main body 11a is provided, and then on the main body 11a the coating film 12 is provided again. On the coating film 12, an upper part 31 constituting the mold 30, is further arranged. In other words, the main body 11a is sandwiched between two coating films 12.

Furthermore, when the biodegradable plastics of the low melting point is adopted as the adhesive, as fig. 14 shows, the adhesive film 13a made thereof is provided between the coating film 12 and the main body 11a. That is to say, over the lower part 32, the coating film 12, the adhesive film 13a, the main body 11a (expanded molded article), the adhesive film 13a, and the coating film 12, are arranged in that order. By the way, in fig. 14, spaces are left between the films and between the molded article and the film, for convenience of description.

After the step above, temperatures of the parts 31 and 32 are preset between the not less than softening point of the coating film 12 and less than the melting point thereof in advance, and then the coating film 12 is attached on the surface of the main body 11a by pressing the upper part 31 and the lower part 32 from both above and below and exerting appropriate pressure on the parts 31 and 32. At this moment, since the adhesive film 13a is melted at a temperature not higher than the softening point of the coating film 12, the melted adhesive film 13a is fused and adhered to the surface of the main body 11a and becomes the adhesive layer 13, then on the same, the coating film 12 is attached.

By the way, if a biodegradable plastic, melted at a temperature between the not less than softening point of the coating film 12 and less than the melting point thereof, is adopted as the adhesive film 13a, heating temperature of the parts 31 and 32 also have to be set between the softening point of the coating film 12 and the melting point thereof.

The pressure exerted when the coating film 12 is attached is not specifically limited if it is set depending on type of an adhesive used, but what is preferable is such relatively high pressure that the thickness of the expanded molded article is reduced. On this account, it becomes possible to make adhesion of the coating film 12 better by the adhesive layer 13 and also to make the main body of the biodegradable container (bowl-shaped container 10a in fig. 4 (b)), which is the final molded article, thinner. Therefore, it is possible to improve stackability (make it easy to stack cups and to increase the number of cups to be stacked to a specified height) of the container.

When the after attaching method is adopted in the manufacturing method of the present invention, as described above, it is especially preferable that the adhesive film 13a is used as the adhesive to attach the coating film 12. When this method is used, it becomes possible to omit a step to apply the adhesive on the surface of the expanded molded article and the manufacturing method of the biodegradable molded article is further simplified, since providing the adhesive film 13a before attaching the coating film 12 is all that is needed in this method.

That is to say, the expanded molded article (main body 11a, etc.), which is the main body of the main body of the biodegradable container, is clearly hydrophilic, because the molded article is mainly made of starch and contains a certain amount of water. Meanwhile, as already described, the coating film 12 is hydrophobic. Thus it is highly likely that the coating film 12 is not sufficiently attached to the expanded molded article, when the coating film 12 is simply attached by using 'the after attaching method.

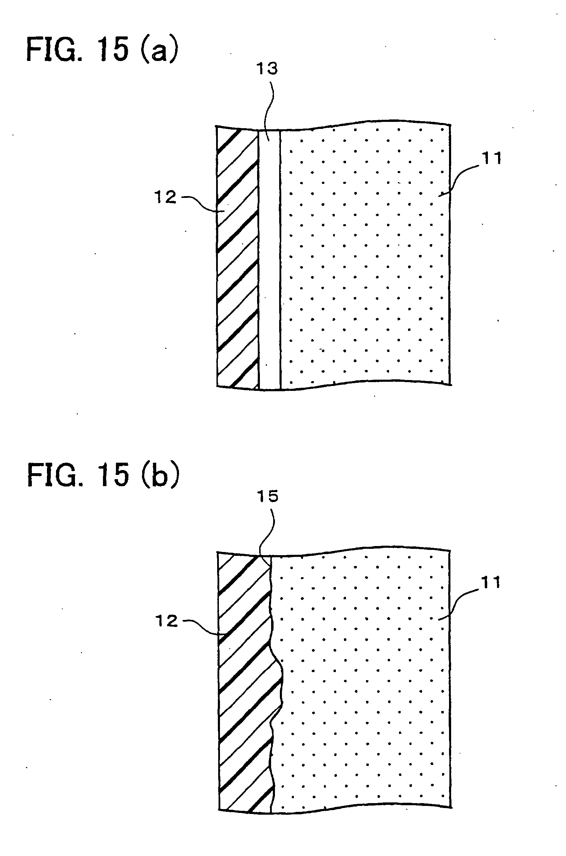

On the contrary, if the coating film 12 is attached by using the adhesive film 13a, as fig. 15 (a) shows, the coating film 12 is certainly attached to the hydrophilic expanded molded article 11 with the adhesive layer 13 in between. In result, it becomes possible to stabilize the attaching condition of the coating film 12 on the main body of the biodegradable container, and also to further improve water resistance and gas impermeability of the same.

By the way, in the after attaching method, it is possible to use as the coating film 12, what are preformed substantially identical with an outside shape of the resulting main body of the biodegradable container such as a molding film, a film part, and an outside shape film, etc. that are used in the simultaneous attaching method descried later.

In this manner, the coating film is not ripped in the attaching step of, if the coating film is preformed in a shape substantially identical with the outside shape of the main body of the biodegradable container, hence this enables proper manufacture of the main body of the biodegradable container with deep draw depth. The molding film, the film part, and the outside shape film are described in detail in the description of the simultaneous attaching method.

Next, the simultaneous attaching method is described. As described above, this method includes at least a simultaneous molding and attaching step in which the molding material is molded through steam expansion and at the same time the coating film 12 is attached. The main body of the biodegradable molded article acquired by this method is arranged so that the coating film 12 is formed directly on the surface of the expanded molded article (main bodies 11a, 11b, and 11c), as shown in figs. 4 (a), 5 (a), 6 (a), etc. Comparing to the aforementioned after attaching method, this simultaneous attaching method has advantages as follows.

Firstly, the number of the steps can be reduced. That is, it is possible to reduce the steps in comparison to the after attaching method requiring at least two steps to attach the coating film 12, since the simultaneous attaching method is capable of attaching the coating film 12 virtually in one step. Moreover, it is possible to reduce the manufacturing time thanks to the capability of attaching in one step. As a result, it becomes possible to more efficiently manufacture the main body of the biodegradable container.

Secondly, the attaching mold becomes unnecessary. That is to say, in the simultaneous attaching method, attaching the coating film 12 is done concurrently with molding the expanded molded article (main body 11a, etc.) by using the mold (metal mold 20a, etc.). Thus the attaching mold (metal mold 30 shown in fig. 14, etc. ) for attaching the coating film 12 in the after attaching method is unnecessary. On this account, it becomes possible to cut costs for the manufacturing facilities and also to downsize the facilities, since the attaching facilities including the attaching mold becomes unnecessary.

Thirdly, it becomes unnecessary to use adhesives. That is, in the simultaneous attaching method, since the coating film 12 is attached concurrently with molding the expanded molded article, the coating film 12 is substantially bonded to the surface of the expanded molded article (main body 11a, etc.) Thus it becomes possible to cut costs of the raw materials of the adhesive and also to further improve biodegradability of the main body of the resultant biodegradable container, since the omission of the adhesive increases a starch content in the main body.

Fourthly, the attaching condition of the coating film 12 is as stable as that of the coating film 12 in case of the after attaching method using the adhesive film 13a, since the coating film 12 is substantially bonded to the expanded molded article.

As already described, while the expanded molded article such as main body 11a is hydrophilic, the coating film 12 is hydrophobic. Thus it is highly likely that the coating film 12 is not sufficiently attached to the expanded molded article, when the coating film 12 is simply attached on the expanded molded article.

However, in the simultaneous attaching method, the coating film 12 is attached concurrently with molding through steam expansion of the molding material, at a temperature at least between not less than the softening point and less than the melting point of the biodegradable plastic that is the main ingredient of the coating film 12. Hence the heated and pressurized coating film 12 faces the expanded molded article in the step of expansion and molding. So the softened coating film 12 receives pressure of the mold from outside and that of the expanded molded article in the step of expansion and molding from inside so as to closely contact with the expanded molded article. In result, the coating film 12 is fused and attached on the surface of the expanded molded article.

On this account, as shown in fig. 15 (b) , a boundary surface 15 of a layer of the coating film 12 with the surface of the expanded molded article 11 in a cross section of the resultant main body of the biodegradable container does not become a smooth surface created by the simple attaching (see the condition in the after attaching method in fig. 15 (a)) but becomes, for instance, an irregular surface with bumps and dips, so the coating film 12 is adequately adhered to the expanded molded article 11. Consequently, the attaching condition of the coating film 12 becomes highly strong and as stable as the condition of the attaching by the adhesive layer 13. Thus it is possible to further improve the water resistance and the gas impermeability of the main body of the resultant biodegradable container.

By the way, although the boundary surface 15 of the layer of the coating film 12 with the surface of the expanded molded article 11 is simply described as, for instance, an irregular surface with bumps and dips in fig. 15 (b), of course the state of the surface 15 is not limited to this, and the surface 15 may take various forms depending on the components of the coating film 12 and the expanded molded article 11, or conditions of the simultaneous attaching method, etc. Therefore, in the present invention, the attaching condition of the layer of the coating film 12 on the expanded molded article 11 as the main body of the biodegradable molded article acquired by the simultaneous attaching method is not particularly limited as long as these two are almost completely adhered.

Taking these four advantages into account, adopting the simultaneous attaching method makes it possible to provide the main body of the biodegradable container at lower cost, since the main body of the biodegradable container, having the same quality as the one manufactured by the after attaching method, can be manufactured more efficiently and at lower cost than using the after attaching method. Hence this makes it easier to utilize the hermetically sealed container of the present invention for the disposal use.

However, it is sometimes difficult to apply the simultaneous attaching method, depending on the type of the coating film 12 and composition of the molding material, etc. In this case, the after attaching method is very preferably used. In other words, each of the after attaching method and the simultaneous attaching method has advantages thereof, thus the methods are appropriately selected in accordance with the situation. So both of the methods have benefits and advantages as the manufacturing methods of the main body of the biodegradable.

Now, the simultaneous attaching method is a method that the coating film 12 is softened at the temperature within the range between less than the melting point and not less than the softening point, concurrently with steam expansion molding of the molding material, and then the coating film 12 is attached concurrently with molding the expanded molded article. Thus it is required to set the conditions of the heating method depending on the coating film 12 to be attached.

That is to say, since heating at a temperature not less than 100°C is simply required to mold the molding material through steam expansion, a biodegradable plastic whose melting point is not less 100°C hould be selected as the main ingredient of the coating film 12, if the external heating is adopted as the heating method. If the coating film 12 is mainly made of the biodegradable plastic whose melting point is not more than 100°C, the coating film 12 is completely melted at a temperature for sufficient steam expansion molding of the molding material. Hence it becomes impossible for the coating film 12 to be film-shaped or sheet-shaped, so a uniform layer of the coating film 12 without any gaps and holes cannotbe formed on the surface of the expanded molded article.

In the meantime, it is preferable to use the coating film 12 mainly made of the biodegradable plastic whose melting point is not less than 100°C, even in case of using the internal heating as the heating method. However, it is possible to use the one having relatively low melting point, compared to the external heating.

The molding material itself is heated in case of the internal heating. Thus the coating film 12 is heated by the molding material that is in the step of the expansion molding and under high temperature conditions, and then attached on the surface of the expanded molded article. Hence using the internal heating permits the use of the coating film 12 mainly made of a biodegradable plastic having relatively low melting point, since the coating film 12 is not directly heated by the mold.

Dielectric heating is particularly suitable for internal heating. By the dielectric heating, the molding material is rapidly heated in an early stage of the expansion molding and the whole of the molding material is expanded altogether. Because of this, pressure to press the coating film 12 against the mold is generated strongly as well as evenly. Also, controlling the temperature of the mold and heat generation of the mold allows to raise the temperature of an adhesive surface (surface to be bonded with the coating film) of the expanded molded article to near the melting point, while keeping the temperature of a mold contact surface (surface to contact with the mold) below the melting point. As a result of these features, it becomes possible to acquire the main body of the biodegradable container in which the expanded molded article and the coating film 12 are closely adhered.

The dielectric heating is a method to heat an object to be heated of dielectric loss of the object. There are different types of dielectric heating, such as:
high frequency dielectric heating in which high frequency wave (HF; 3 to 30 MHz) is fed to an object to be heated (dielectric) to dielectrically heat the same; and
microwave heating in which microwave (HF; 1 to 100 GHz) is fed to an object (dielectric) to dielectrically heat the same.
Of the methods above, the high frequency dielectric heating is more suitable because the dielectric heating can be done by using a metal mold as an electrode and heating the molding material can be easily controlled under precise control by a'n output device (high frequency generator).

Meanwhile, in case of external heating, the coating film 12 is heated to very high temperature to sufficiently expand and mold the molding material because, in this method, after the coating film 12 is directly heated by the mold, and the molding material inside the mold is also heated. Hence it is preferred if the coating film 12 has a higher melting point, and the heating temperature of the mold should be adjusted more precisely, in consideration of the melting point and softening point of the coating film 12.

Consequently, in case of the simultaneous attaching method, internal heating has higher versatility as the heating method for the simultaneous attaching method, in terms of easier attaching and wider choice of the coating film 12, etc.

However, the external heating has advantages in that softening of the coating film 12 and adhesion thereof to the surface of the expanded molded article are easily controllable, since the coating film 12 is directly heated by the mold. Also, in case of the coating film 12 having a high softening point, when the molding material is heated enough to melt the coating film 12 by using internal heating, the expanded molded article might be degraded due to over expansion molding and so on, depending on the kind of molding materials. In this case, external heating may be preferred. Consequently, in case of the simultaneous attaching method, both external heating and internal heating have each own advantage as the heating method, so the heating method is not particularly limited but should be appropriately chosen whether to use external heating or internal heating, or both.

It is possible to classify the simultaneous attaching method, for instance, under seven types as below, depending on the use of the coating film 12 when attached.

### [Method 1]

As in the case of the attaching step of the coating film 12 in the after attaching method above, the method 1 is a method that the molding material is inserted between the coating films 12 which are not formed and are still sheet-shaped, then the coating film 12 is attached to the expanded molded article which is simultaneously molded though steam expansion molding by the mold. This method is particularly preferred for molding a main body of a horizontally long and wide biodegradable container such as the plate-shaped container 10b shown in fig. 5 (a), in correspondence with a sheet-shaped coating film 12.

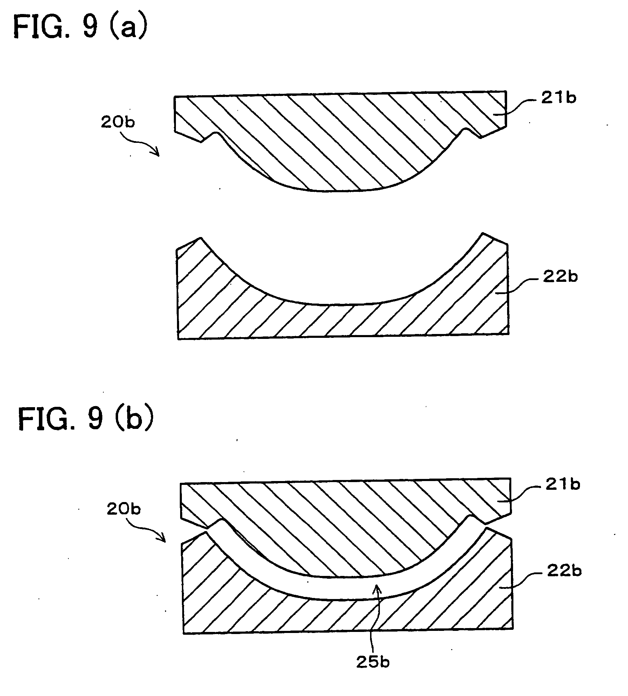

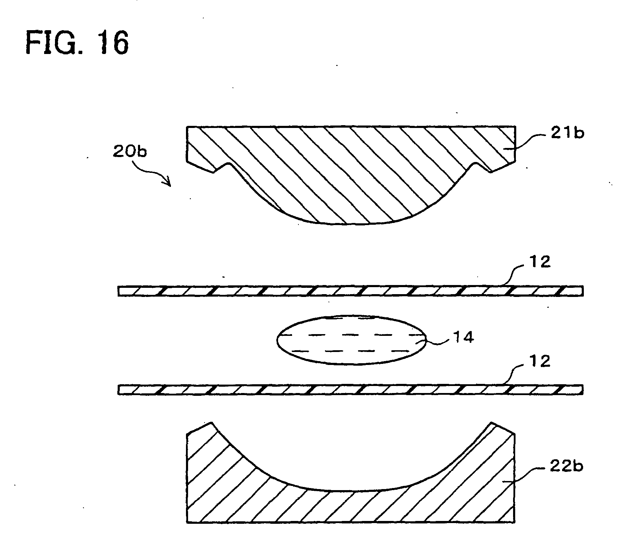

To describe the method 1 concretely, as fig. 16 shows, the metal mold 20b shown in figs. 9 (a), and 9 (b) is arranged so that two sheet-shaped coating films 12 are provided between the upper and lower parts 21b and 22b, and a slurry or dough molding material 14 is further provided between the coating films 12 and 12. At this moment, the metal mold 20b is heated to less than the melting point of the biodegradable plastic that is the main ingredient of the coating film 12. Then the upper and lower parts 21b and 22b are paired up and heated pressurized to be molded, by the external heating and/or internal heating. It is possible to acquire the plate-shaped container 10b (see fig. 5 (a)) as the main body of the biodegradable container only by this step.

### [Method 2]

Method 2 is similar to the method 1, except that the coating film 12 is preformed to be substantially matched with an outside shape of a main body of a biodegradable container. This method can be preferably used for a main body of a biodegradable container with a relatively deep draw depth, i.e. vertically tall shape, such as the bowl-shaped container 10a shown in fig. 4 (a).

Some types of the coating films 12 cannot be stretched extensively, depending on the type of the main ingredient thereof, i.e. the biodegradable plastic. Hence if the method 1 is employed to mold the biodegradable container with the deep draw depth such as the bowl-shaped container 10a shown in fig. 4 (a), the coating film 12 might be ripped and not be able to cover the expanded molded article sufficiently. So a molding film is prepared, which is the coating film 12 preformed similar to the desired shape. On this account, the coating film 12 can cover an expanded molded article having more complicated shape and deep draw depth certainly and efficiently.

The forming method of the coating film 12 is not particularly limited and conventional methods to form sheet films are used. For instance, various forming methods, such as vacuum forming, injection molding, blow molding, etc. are preferably used. Also it is not necessary to shape the coating film 12 precisely identical to the main body of the biodegradable container after molding, as long as the shape of these two are substantially similar to each other. It is sufficient that the coating film 12 is roughly identical with the shape of the main body of the biodegradable container after molding, i.e. the shape of the mold, inasmuch as the coating film 12 has some flexibility.

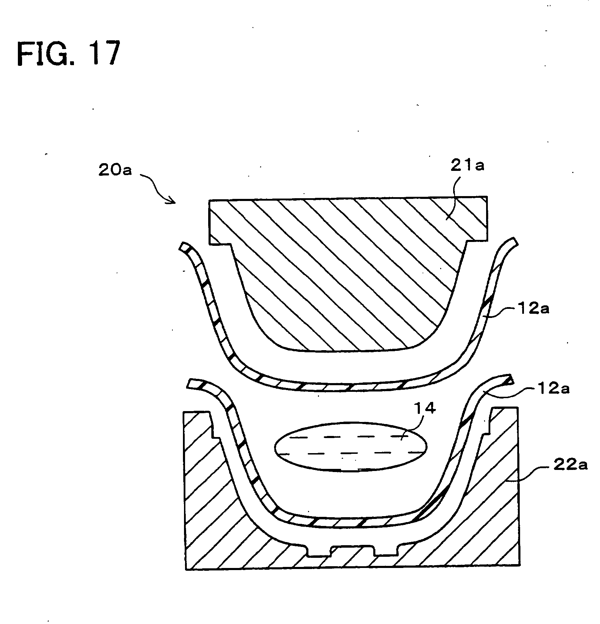

To describe the method 2 more specifically, as shown in fig. 17, the metal mold 20a shown in figs. 5 (a) and 5 (b) is arranged so that two molding films 12a preformed substantially similar to the bowl-shaped container 10a are provided between the upper and lower parts 21a and 22a, and the slurry or dough molding material 14 is further provided between the molding films 12a and 12a. At this moment, the metal mold 20a is heated to less than the melting point of the biodegradable plastic that is the main ingredient of the forming film 12a (coating film 12). Then the upper and lower parts 21a and 22a are paired up, and heated and pressurized to be molded, by the external heating or internal heating. It is possible to acquire the bowl-shaped container 10a (see fig. 4 (a)) as the main body of the biodegradable container by this single step.

### [Method 3]

Method 3 is identical with method 1, except that the coating film 12 is preformed like a bag, wherein the molding material is to be placed. This method is also particularly preferred for molding a main body of a horizontally long and wide biodegradable container such as the plate-shaped container 10b shown in fig. 5 (a) , in correspondence with the sheet-shaped coating film 12.

In case of this method, as a bag film, the coating film 12 is formed into a bag to accommodate the molding material inside. If the molding material is placed inside this bag film, the molding material can be regarded as substantially wrapped by the bag film. So it becomes possible to store large amounts of the molding material prepared and pre-portioned in each bag film for a certain period of time. Furthermore, preparation of the molding is completed only by putting the wrapped material in the mold, at the time of manufacturing the main body of the biodegradable container. This makes it possible to further simplify the manufacturing process.

The method to form the coating film 12 into the bag film is not particularly limited to any method, and conventional methods to form sheet or film-shaped plastics into bag-shaped ones can be preferably used. Such example includes pillow type packaging. The storing method of wrapped material wherein the molding material is portioned in the bag film is not particularly limited to any method as well, if conventional storing methods to prevent starch from going rotten are used.

By the way, in the present invention, the bag film 12b storing the molding material inside is termed "compositions for expansion molding". As described above, the compositions for expansion molding (abbreviated as molding composition) are capable of being prepared as large in numbers in advance and being stored for a certain period of time, and at the same time the main body of the biodegradable container on which the coating film is attached can be easily manufactured by simply putting the molding compositions in the molds. So the molding composition is suitable for manufacturing the main body of the biodegradable container in an easy and simple step.

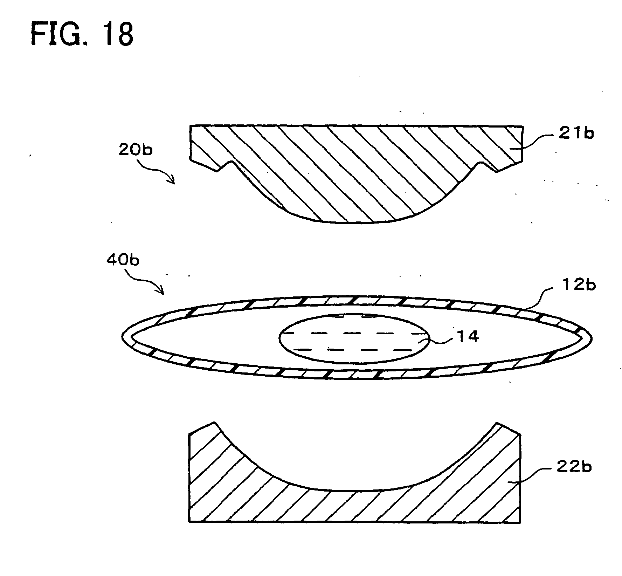

To describe the method 3 more specifically, as shown in fig. 18, the coating film 12 is preformed into a bag shape to make the bag film 12b, and then molding compositions 40b is prepared in advance by portioning a certain amount of the molding material 14 in each of the bag films 12b. These molding compositions 40b are stored in a specified storage etc. Following the steps above, in the metal mold 20b shown in figs. 9 (a) and 9 (b), the molding compositions 40b taken out from the storage is placed on the lower part 22b. Now the molding preparation is done.

At this moment, the metal mold 20b is heated up to a temperature of less than the melting point of the biodegradable plastic that is the main ingredient of the coating film 12 (bag film 12b) . Then the upper and lower parts 21b and 22b are paired up and heated and pressurized to be molded, by the external heating or internal heating. It is possible to acquire the plate-shaped container 10b (see fig. 5 (a)) as the main body of the biodegradable container by this single step.

### [Method 4]

Method 4 is a method that integrates methods 1, 2, and 3, wherein the coating film 12 is preformed substantially similar to a bag shape as well as an outside shape of the main body of the biodegradable container. In other words, the bag film 12d of the method 3 is further modified to a molding bag film with substantially identical shape as that of the main body of the biodegradable container. This method is also preferably used for a main body of a biodegradable container with relatively deep draw depth, i.e. vertically tall shape, such as the bowl-shaped container 10a shown in fig. 4 (a).

The molding bag film may be formed so that the coating film 12 is modified to be a bag-shaped film in advance and then formed to be substantially identical with the outside shape of the main body of the biodegradable container, or modified to the bag film after being substantially molded to the outside shape. The forming method and the method to make the bag film are not particularly limited and conventional methods can suitably be used, as stated above.

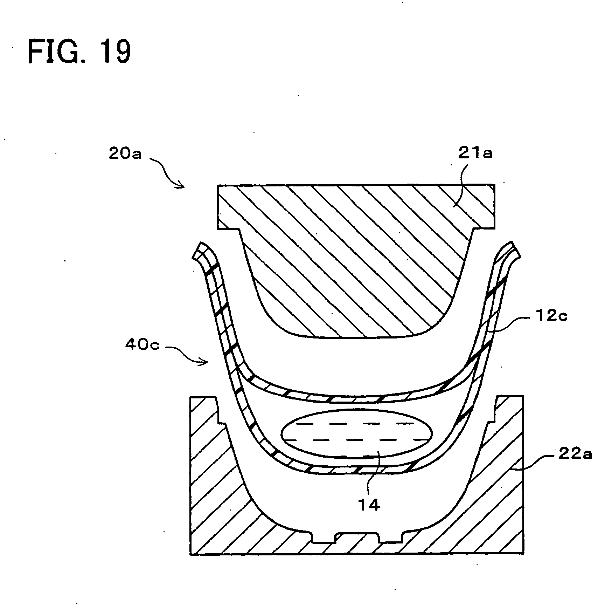

To describe method 4 more specifically, as shown in fig. 19, the coating film 12 is preformed to the molding bag film 12c, and then the molding compositions 40c are prepared by portioning a certain amount of the molding material into each of the molding bag films 12c: It is possible to store these molding compositions 40c in a specified storage etc. Following the steps above, in the metal mold 20a shown in figs 8 (a) and 8 (b), the molding compositions 40c taken out from the storage is placed on the lower part 22a, and the molding preparation is now done.

At this moment, the metal mold 20a is heated up to a temperature of less than the melting point of the biodegradable plastic that is the main ingredient of the coating film 12 (molding bag film 12c). Then the upper and lower parts 21a and 22a are paired up and heated and pressurized to be molded, by the external heating or internal heating. It is possible to acquire the bowl-shaped container 10a (see fig. 4 (a)) as the main body of the biodegradable container by this single step.

### [Method 5]

Method 5 is identical with method 1, except that the coating film 12 is used as a film part cut out to be preformed substantially identical to the outside shape of the main body of the biodegradable container. This method is preferably used for a main body of a biodegradable container with a deeper draw depth or more complicated shape, such as the cup-shaped container 10c shown in fig. 6 (a).

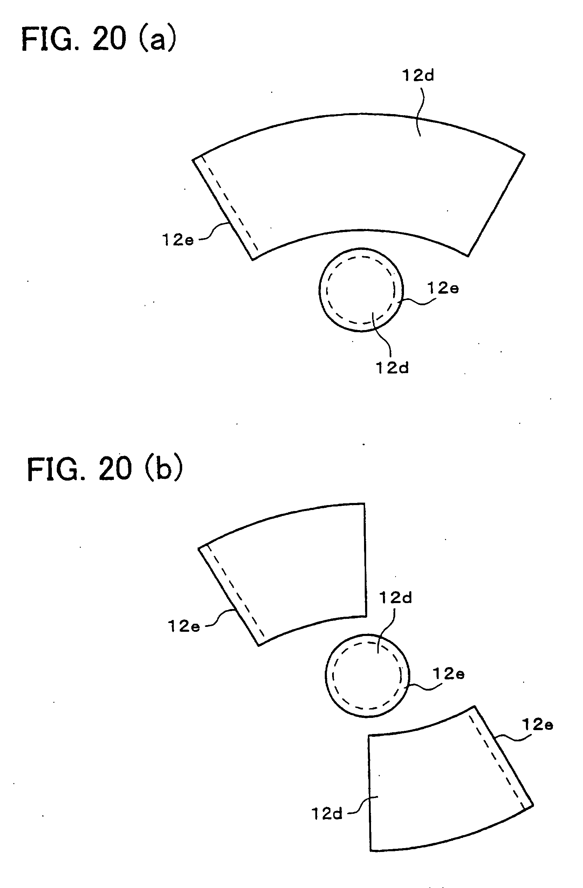

Although the concrete form of the film part is not particularly limited, usually, as figs. 20 (a) and 20(b) show, it is preferable to make film parts 12d by cutting into individual face of rough development elevator of the main body of the biodegradable container after molding (for instance the cup-shaped container 10c).

The film part 12d further has an overlap section 12e equivalent to an overlap width, as figs. 20 (a) and 20 (b) show. This overlap section 12e is provided around a bottom film part 12d, and along an edge of a side film part 12d where the film part 12d is overlapped with itself to be adhered when the film part 12d is cylindrically wound, etc.

These overlap sections 12e are overlapped with each other at a designated section of each film part 12d, when the film part 12d is arranged in the cavity of the mold in the step of molding. On this account, the overlap section 12e and a part of the overlapping film part 12d are both softened and adhered (fused) to each other. Consequently, the film parts 12d is assembled as one substantially cup-shaped coating film 12, and after this coating film 12 is further adhered to the surface of the expanded molded article, the cup-shaped container 10c of the present invention is acquired.

The shape of the unfolded film part 12d is not particularly limited. So taking the cup-shaped container 10c as the example, the film part 12d may be cut out in two as the side and the bottom, i.e. the side and the bottom are each film part 12d as shown in fig. 20 (a), or in three as two sides and the bottom, as indicated fig. 20 (b). In this matter, it is sufficient that an assembly of all film parts 12d overlapped at the overlap sections 12e takes a shape matched with the main body of the biodegradable molded article such as the cup-shaped one.

The coating film 12 before attaching is more similar to the shape after the molding in this method, than the methods 2 and 4. This method is adequately used when the coating film 12 mainly made of a main body of a biodegradable container with low drawability, especially when the main body of the biodegradable container with the deep draw depth such as the cup-shaped container 10c is molded using the coating film 12 with low drawability, and further when the thickness of the coating film 12 after attaching is desired to be freely adjusted, etc.

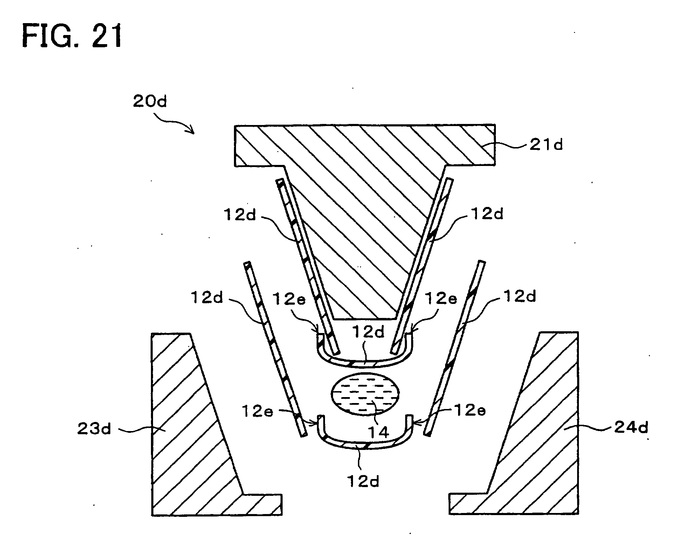

To describe the method 5 more specifically, in the metal mold 20d shown in figs. 11 (a) and 11 (b), the film part 12d matched with the bottom of the cup-shaped container 10c and the film part 12d matched with the side are arranged along the shapes of the cavity of the lower parts 23d and 24d, as shown in fig. 21. At this time, the overlap sections 12e have to be surely overlapped with each other.

Then the molding material 14 is provided for the substantially cup-shaped film part 12d. At the same time, the film part 12d matched with the bottom of the cup-shaped container 10c and the film part 12d matched with the side thereof are arranged in accordance with the shape of the upper part 21, then the upper part 21d is paired with the lower parts 23d and 24d with the arranged film parts 12d. Of course the parts 21d, 23d, and 24d are heated up to a temperature of less than the melting point of the biodegradable plastic, which is main ingredient of the coating film 12.

After the steps above, heat and pressure molding is done by the external or internal heating. By this step of heat and pressure molding, the overlap sections 12e of the film parts 12d are fused as above and a layer of the coating film 12 is formed on the surface of the expanded molded article (main body 11c) without a gap between them. As a result, it is possible to acquire the cup-shaped container 10c (see fig. 6 (a)) as the main body of the biodegradable container by the single step above.

### [Method 6]

Method 5 is identical with method 6, except that the film parts 12c are adhered at the overlap sections 12e for the purpose to make the film parts 12c almost match with the outside shape of the main body of the biodegradable molded article before molding the same. As in the case of the method 5, this method is preferably used for a main body of a biodegradable container with a deeper draw depth or more complicated shape, such as the cup-shaped container 10c shown in fig. 6 (a).

Being almost identical to the method 5, this method is arranged so that an outside shape film is preformed by securely adhering the overlap sections 12e and 12e by way of fusing etc. This method is preferable when the coating film 12, in which the overlap sections 12e and 12e are not easily fused, is used in the method 5.

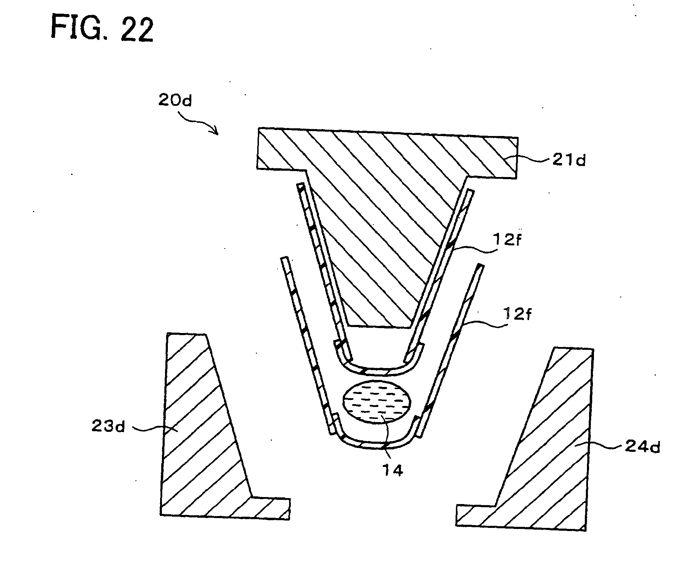

To describe the method 6 more specifically, as shown in fig. 22 in the metal mold 20d indicated in figs. 11 (a) and (b), two outside shape films 12f, which are adhered to be substantially similar to a cup shape in advance, are overlaid and arranged between the upper and lower parts 21d, 23d, and 24d, and then the molding material is provided between the outside shape films 12f and 12f. At this moment, the metal mold 20b is heated up to a temperature of less than the melting point of the biodegradable plastic that is the main ingredient of the outside shape film 12f (coating film 12). Then the upper and lower parts 21c, 23d, and 24d are paired up and the heat and pressure molding is 'conducted using the external or internal heating. As a result, it is possible to acquire the cup-shaped container 10c (see fig. 6 (a)) as the main body of the biodegradable container by the single step above.

### [Method 7]

In method 7, the method 6 is further combined with method 3. That is to say, after the film parts 12c are adhered at the overlap sections 12e and formed to be almost identical with the outside shape of the main body of the biodegradable container before the molding process, the shaped film parts 12c are overlaid to be a substantially bag shape and the molding material is portioned into the same. As in the cases of the methods 5 and 6, this method is preferably used for a main body of a biodegradable container with a deeper draw depth or more complicated shape, such as the cup-shaped container 10c shown in fig. 6 (a).

As in the cases of the methods. 3 and 4, the molding compositions are prepared by converting the coating film 12 to the bag film and putting the molding material therein. Thus the molding compositions can be stored for a certain period of time and also the preparation of molding can be completed only by putting the molding compositions into the mold at a time, so it becomes possible to further simplify the manufacturing process.

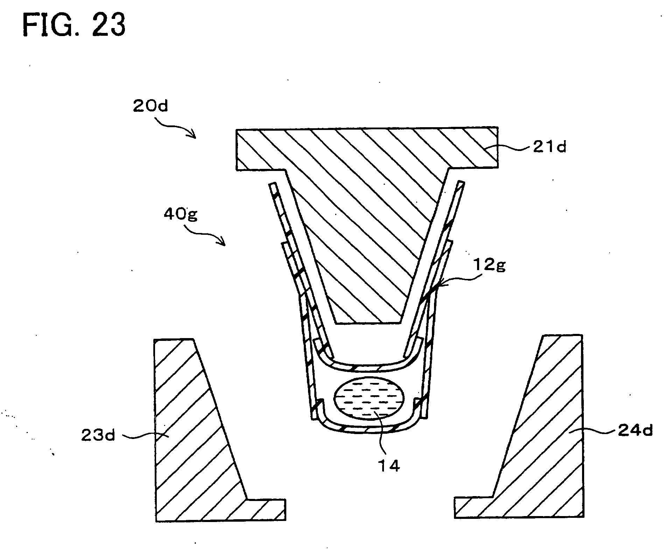

To describe method 7 more specifically, as shown in fig. 23, after the coating film 12 is connected to be the film parts matched with the outside shape of the cup-shaped container 10c, the film parts are adhered to make the outside shape film, and two of the same are adhered to make a bag-shaped outline bag film 12g before the procedures below. Then a certain amount of the molding material 14 is portioned into each of the outline bag films 12g to prepare the molding compositions 40g which may be stored in a specific storage etc. Following the steps above, in the metal mold 20d shown in figs 11 (a) and 11 (b) , preparation for molding is completed easily by simply taking out the molding compositions 40g substantially formed into a cup shape from the storage and placing the same on the lower parts 23d and 24d.

At this moment, the metal mold 20d is heated up to a temperature of less than the melting point of the biodegradable plastic that is the main ingredient of the coating film 12 (outline bag film 12g). Then the upper and lower parts 21d, 23d, and 24d are paired up and the heat and pressure molding is conducted using the external or internal heating. As a result, it is possible to acquire the cup-shaped container 10c (see fig. 6 (a)) as the main body of the biodegradable container of the present invention, by the single step above.

In the present invention, in addition to the mold for molding the expanded molded article, the attaching mold having a cavity that is substantially identical to that of the mold is required, when the after attaching method is adopted for attaching the coating film 12. Meanwhile, when the simultaneous-attaching method is adopted, the attaching mold is unnecessary and the coating film 12 can be attached simultaneously with molding the expanded molded article.

Therefore, it is possible to make the coating film 12 substantially adhere to the surface of the expanded molded article with precision and certainty. Especially, even when a complicatedly shaped molded article is manufactured by using the after attaching method, simply copying the shape of the mold allows to manufacture the molded article without creating the attaching mold 30 matched with the expanded molded article or adjusting the shape delicately, because the shape of the molded article depends on a shape of the cavity of the mold.

Moreover, the present invention is arranged so that the coating film 12 is attached either after the expanded molded article is preformed to a designated shape from starch (natural material) as main ingredient through steam expansion or simultaneously with steam expansion of the expanded molded article above. Thus molded articles having any kind of shapes can be molded as long as capable of being released from the mold. For instance, it is possible to steadily mold the molded articles such as those which have a deep draw depth like a cup, or those which have uneven thickness like a food tray with partitions etc.

Furthermore, when the coating film 12 is attached using the after attaching method, as described above, it is possible to acquire variously shaped molded articles with biodegradability and good water/moisture resistance, since the attaching mold that has the shape substantially identical to that of the mold for molding, is used.

Also, if the coating film 12 which is not only water resistant but also gas impermeable etc. is used, when the molded article is used for a container etc., it becomes possible to prevent the contents thereof from being oxidized or getting moist etc. and a molded container suitable for preservation can be acquired, since it becomes possible to add various characteristics such as gas impermeability to the main body of the biodegradable container.

In addition, when words and pictures are printed on the surface of the coating film 12 in advance by using biodegradable ink, simply attaching the coating film 12 allows to print beautiful and detailed design on the surface of the expanded molded article much easily, compared to printing directly on the surface thereof.

In other words, in the present invention, it is possible to add various characteristics to the main body of the biodegradable container easily and certainly, if the coating film 12 is attached on the expanded molded article after some functions are imparted to the coating film 12 in advance.

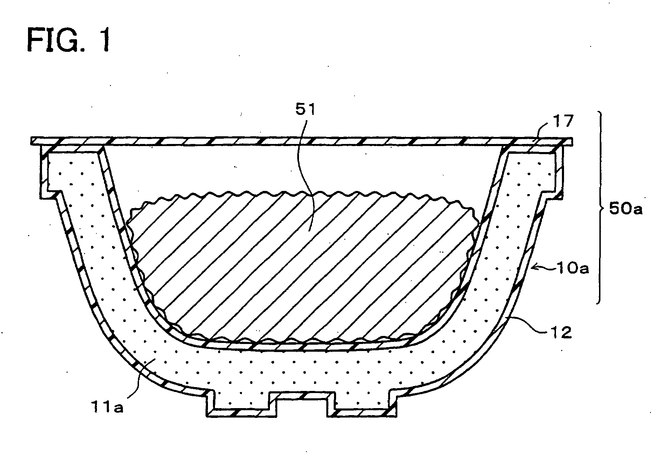

Next, the hermetically sealed container in accordance with the present invention is described using figs. 1, 2, and 3 by way of example in case that the containers 10a to 10c shown in figs. 4, 5 and 6 are used. It is possible to use the containers 10a to 10c shown in figs. 4 (b), 5 (b) and 6 (b) instead of the containers 10a to 10c shown in figs. 4 (a), 5 (a) and 6 (a) (not illustrated).

As shown in fig. 1, a bowl-shaped hermetically sealed container 50a as the hermetically sealed container in accordance with the present invention includes a bowl-shaped container 10a having a space to hold the contents 51 at the inside, and an opening to take in and out the contents 51, and a lid 17 mainly made of a plastic to seal the opening of the bowl-shaped container 10a, wherein the lid 17 is heat-sealed to a rim of the opening of the bowl-shaped container 10a.

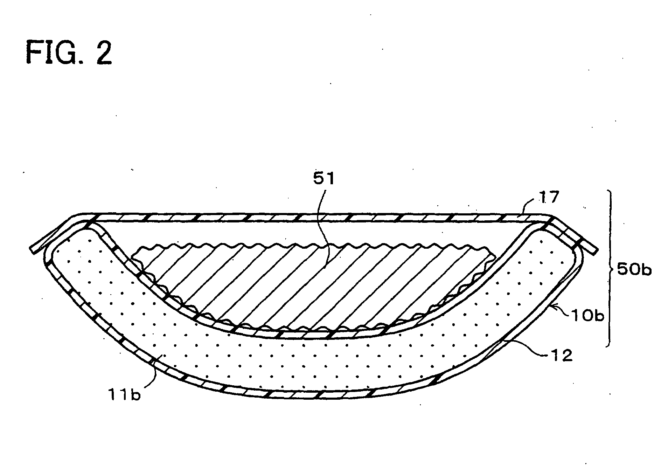

As shown in fig. 2, a plate-shaped hermetically sealed container 50b as the hermetically sealed container in accordance with the present invention includes a plate-shaped container 10b having a space to hold the contents 51 at the inside and an opening to take in and out the contents 51, and a lid 17 mainly made of a plastic to seal the opening of the plate-shaped container 10b, wherein the lid 17 is heat-sealed to a rim of the opening of the plate-shaped container 10b.

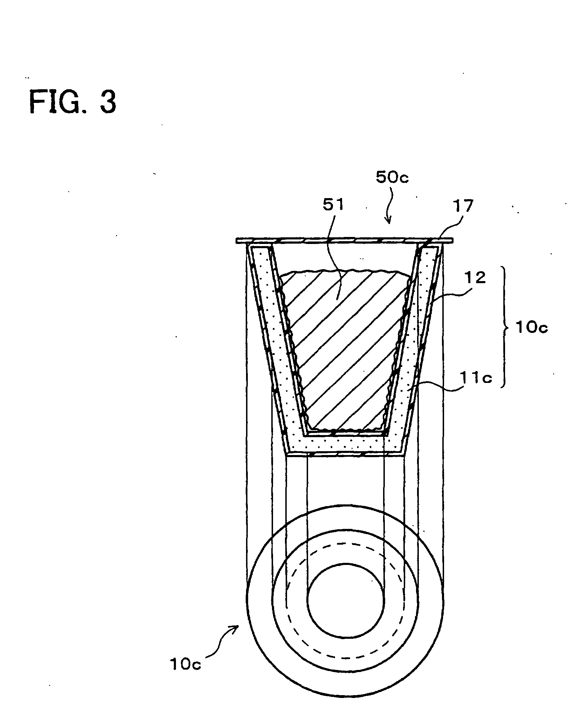

As shown in fig. 3, a cup-shaped hermetically sealed container 50c as the hermetically sealed container in accordance with the present invention includes a cup-shaped container 10c having a space to hold the contents 51 at the inside and an opening to take in and out the contents 51, and a lid 17 mainly made of a plastic to seal the opening of the cup-shaped container 10b, wherein the lid 17 is heat-sealed to a rim of the opening of the cup-shaped container 10c.

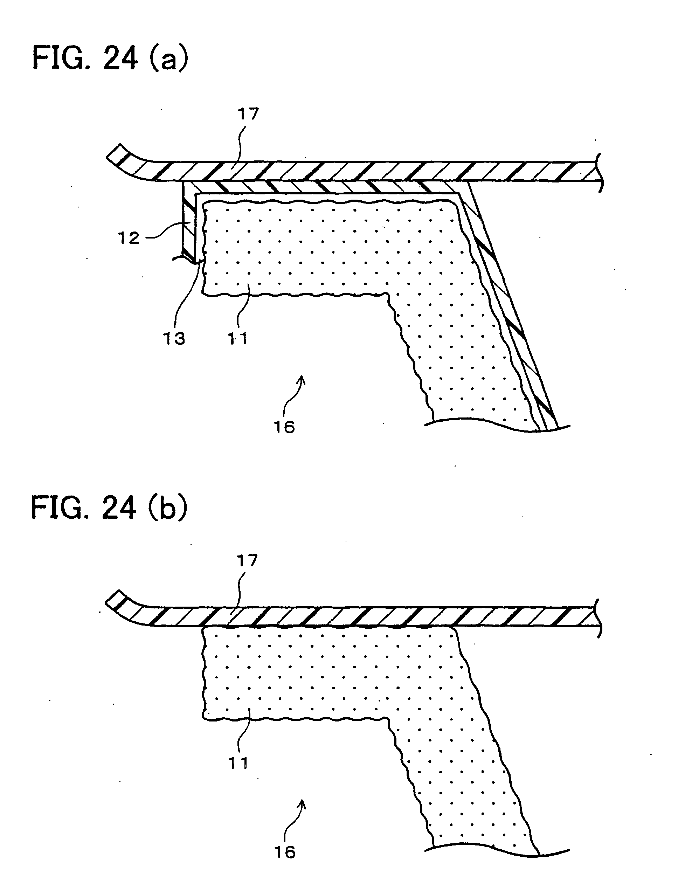

It is preferable that the coating film 12 is adhered at least to the rim 16 of the opening of the main body (bowl-shaped container 10a, plate-shaped container 10b, and cup-shaped container 10c) as shown in fig. 24 (a).

Since the expanded molded article is mainly made of natural starch through steam expansion, as schematically shown in figs. 24 (a) and 24 (b), fine asperity is found on the surface of the expanded molded article. Accordingly, as shown in fig. 24 (b) , if the coating film 12 is not adhered to the rim 16 of the opening of the main body, the asperity makes the adhesiveness of the seal-shaped lid 17 and the rim 16 worse, and sufficient hermetical closeness cannot be achieved.

Also, in an conventional art, a water resistant plastic is covered, however, fine asperity is found on the surface of the expanded molded article. Even if plastic is uniformly covered, a gap or pinhole is likely to be formed on the plastic film covered in accordance with the asperity, which cannot form uniform coating film. Thus, it is not possible to show sufficient water resistance or moisture resistance. Furthermore, if it is necessary to prevent oxidation of the contents, the fine asperity reduces gas impermeability to be required.

On the contrary, in the present invention, the coating film 12 formed as originally a complete film is adhered, for example, through an adhesive layer 13, or is softened simultaneously with expanding and molding and is directly and closely adhered. Accordingly, as shown in fig. 24 (a), adhesiveness of a seal-shaped lid 17 and a rim 16 to which the coating film 12 is attached, is improved. In result, hermetic closeness (seal-up) such as water resistance, moisture resistance and gas impermeability is improved, which can further improve storage stability of the contents.

Also in the hermetically sealed container in accordance with the present invention, it is preferable that the coating film 12 is wholly attached to the container when the inside is exposed to high temperature (about 100°C), giving high heat resistance to the container, for instance, a container for ready-to-eat noodles which boiling water is put inside (bowl-shaped hermetically sealed container 50a shown in fig. 1)

In addition, in the hermetically sealed container in accordance with the present invention, it is preferable that the coating film 12 is wholly adhered to the container to give gas impermeability to the container so that a rehydrated food (rehydrated noodle etc.) may not get oxidized or moistened when it is used to enclose a rehydratable food at the inside, such as a ready-to-eat noodle container to enclose a rehydratable noodle at the inside.

It is preferable that the lid 17 is a film mainly made of a plastic. This can give moisture impermeability or gas impermeability to the lid 17, and facilitate peel-off of the lid 17 at opening.

Also, it is preferable that the lid 17 has light blocking effect. The lid 17 having light blocking effect may be laminated product layered with a plastic layer and a light blocking layer, or a substance molded from a material adding light-blocking material to plastic. However, laminated product layered with plastic layer and light-blocking layer (the plastic layer should exist at a side contacting on the main body of the biodegradable container) is preferable since it can obtain sufficient light blocking effect. The light-blocking layer may be a layer consisting of metals such as aluminum etc., a layer consisting of minerals such as silica and a layer of fibers such as paper etc. Since the lid 17 has excellent light blocking effect and is printable, a laminated material which consists of a plastic layer, metal layer and paper layer laminated in the order is the most preferable.

The lid 17 may be made of a non-biodegradable plastic. In the case, the lid 17 cannot be biodegraded together with the main body of the container (bowl-shaped container 10a, plate-shaped container 10b, and cup-shaped container 10c), so the lid 17 should be separated for disposal. Accordingly, the lid 17 is preferably made of a biodegradable plastic, and both main body of the container (bowl-shaped container 10a, plate-shaped container 10b, cup-shaped container 10c) and lid 17 become biodegradable. It is thus possible to biodegrade the lid 17 without separating from the main body, the lid separated from the main body therewith after opening the hermetically sealed container (bowl-shaped hermetically sealed container 50a, plate-shaped hermetically sealed container 50b, and cup-shaped hermetically sealed container 50c) and taking out the contents 51. Therefore, it is not necessary to separate the lid 17 and labor for disposal can be saved. It is possible to provide more ecological hermetically sealed container since the lid 17 is biodegradable.

From the above, the best mode of the lid 17 is a laminated film consisting of a biodegradable film mainly made of a biodegradable plastic and a light-blocking layer, and at least a biodegradable film exists on the surface at a side contacting on the main body of the biodegradable container.

It may be more preferable that the above biodegradable film can give gas impermeability, heat insulation, wear resistance, improved strength and flexibility. Especially, in case of using the hermetically sealed container in accordance with the present invention as storage container having high hermetical closeness, it is necessary to avoid oxidation or moisture absorption of the contents to be enclosed inside. Therefore, it is very preferable that the biodegradable film can give gas impermeability, that is, has gas impermeability.

In case that the hermetically sealed container in accordance with the present invention, is used as a ready-to-eat noodle container, since it is necessary to avoid deformation and melting of the main body of the biodegradable container due to heat of the contents 51 to be enclosed at the inside, it is preferable that the biodegradable film has high heat resistance. More particularly, it is preferable that the melting point of the biodegradable film is not less than 130°C. This can avoid deformation and melting of the lid 17 due to heat of the contents 51 to be enclosed at the inside.

Raw materials of the biodegradable film are not particularly limited if they can bring out at least water resistance, preferably gas impermeability after adhering to the surface of the expanded molded article. More particularly, various materials exemplified as the raw materials of the coating film 12 may be used. Among the various materials, modified polyester is preferable for the biodegradable film constituting the lid 17 due to its excellent gas impermeability and moisture impermeability, and biaxially stretched modified polyester is especially preferable due to its great strength. One material only or a mixture of two materials among the exemplified materials may be used. Also, sub-ingredients such as a biodegradable plasticizer or filler may be added to the biodegradable plastic.

Furthermore, the coating film may be prepared by mixing the above raw materials (biodegradable plastic) with starch. In this case, the mixing ratio of the biodegradable plastic and starch is not particularly limited unless it degrades various functions'including hydrophobicity of the coating film 12. For example, a mixing ratio of 1 to 1 by weight may be preferably used.

In addition, various additives may be added to the biodegradable film. For example, colors, additives to enhance water resistance or gas impermeability, or additives to improve various characteristics in softening at the time of adhesion may be used, but are not be limited to any particular additive.

The light blocking layer in the laminated film is not particularly limited if it has light blocking function, for instance, metal evaporation layer such as aluminum evaporation layer, inorganic compound layer such as silica evaporation layer, fiber layer such as paper layer. Also, in case that the light blocking layer is metal evaporation layer or inorganic compound evaporation layer, biodegradable film may be laminated on both sides of the light blocking layer. In the meantime, in case that the light blocking layer is paper layer, it is preferable that the light blocking layer is inserted between the biodegradable films.

Therefore, the style of the laminated film is what;
(a) aluminum evaporation or silica evaporation is performed on either side of the biodegradable film
(b) biodegradable film is adhered to a surface of the aluminum evaporation or a surface of silica evaporation after aluminum evaporation or silica evaporation is performed on either side of the biodegradable film
(c) the paper layer is laminated between the biodegradable films (paper lamination), etc.

Thickness of the layered film (film thickness) is not particularly limited if it is determined depending on a kind of the biodegradable plastic to bring out water resistance and gas impermeability. At least, the layered film has the thickness that can bring out water resistance and gas impermeability.

The lid 17 is fused and adhered to the coating film 12 by heat-sealing on a rim of the opening of the main body of the container (bowl-shaped container 10a, plate-shaped container 10b, and cup-shaped container 10c). The method to heat-seal the lid 17 is not particularly limited if the lid 17 can be pressed against the coating film 12 heating the coating film 12 and the lid 17. For example, a method to fit the plastic surface in the lid 17 to the flange surface of the main body, then heat and press using a sealing die heated to a given temperature is preferable.

The heating temperature of the lid 17 at heat sealing (surface temperature of the sealing die) is a temperature at which the coating film 12 can be adhered to the lid 17, that is, a temperature beyond the melting point of the plastic which is the main ingredient of the coating film 12 and the lid 17. For the heating method, it is possible to use the afore-mentioned external heating and internal heating. More specifically, it is possible to use external heating to directly heat the sealing die by direct heating means such as direct heat, far-infrared radiation, electric heater, IH heating device, and to use internal heating to heat the coating film 12 and the lid 17 themselves at the inside by internal heating means such as electric heating, high-frequency dielectric heating, and microwave heating.

It is preferable that the contents 51 to be enclosed in the space inside the main body of the hermetically sealed container in accordance with the present invention are ready-to-serve foods, for example, noodles (Chinese noodles, Japanese wheat noodles, buckwheat noodles and fried Chinese noodles), and liquid foods such as soup and juice. If the hermetically sealed container in accordance with the present invention is used as a hermetically sealed food container to include these foods, it is possible to biodegrade the whole container containing the remaining foods left over inside of the hermetically sealed container at the time of disposal.

The hermetically sealed container in accordance with the present invention can be preferably used as a container for a food with high water content, especially due to its water resistance. Also, the hermetically sealed container in accordance with the present invention can be preferably used as a storage container that' can store rehydrated foods such as ready-to-eat foods including noodles for a certain time of period, in case that the lid 17 and the main body has gas impermeability, moisture impermeability, and light blocking effect.

From the above, the hermetically sealed container in accordance with the present invention includes the main body wherein the coating film made of a biodegradable plastic is attached to the surface of the expanded molded article mainly made of starch. This can maintain sustainability (nature to maintain appropriate thickness) of a shape and thermal insulation of the expanded molded article and can give strong water resistance to the surface. At the same time, it is possible to improve strength and flexibility of the expanded molded article.

Moreover, both expanded molded article and film have biodegradability, and especially thick expanded molded article has very excellent biodegradability since it is mainly made of starch. Though the film is made of a biodegradable plastic with slow speed of biodegradability, the film thickness is small enough to be biodegraded. Accordingly the main body of the biodegradable container can exert good biodegradability at the time of disposal.

Furthermore, since the coating film is attached to the surface of the expanded molded article as a perfect film and the seal-shaped lid is heat-sealed on the rim of the opening of the expanded molded article, the opening can be completely sealed.

Now, the present invention is described further in detail, on the basis of examples and comparative examples. However, the present invention is not limited to these examples.

### [Hermetic closeness and moisture impermeability test]

100 grams of calcium chloride is placed in the container as the contents. The hermetically sealed container on which a lid is heat-sealed is used as "a test object", and the hermetically sealed container which does not include any contents is used as "a blank". Then, the "test object" and the "blank" is placed in air conditioning device at 40°C and 90% of relative humidity to measure a change of weight every 10 days. Then, the change of weight every 10 days was calculated by deducting (an increase of weight of the blank) from (an increase of weight of the test object).

### [Moisture resistance strength test]

The container is left alone under high humidity kept at 40°C and 90% of relative humidity for 30 days to check for softening or deformation by moisture absorption, condition of a surface after moisture absorption (good or bad) and strength after moisture absorption (three-staged assessment: excellent (ⓞ), good (○), and poor (×)) and to assess moisture resistance strength.

### [Oxygen permeability test]

Using an oxygen permeability test machine (OX-TRAN®) made by Mocon, Inc., an inlet and outlet tube of nitrogen gas is inserted into the container through its mouth, and then the mouth is fixed and sealed with an adhesive. A certain flow of nitrogen gas is flown into the container through this tube and an amount of oxygen in the air that permeated the container from the outside (a ratio of oxygen gas in gaseous matter inside the container) was measured at 23°C and 50% of relative humidity. A conversion into a permeating volume of 100% oxygen gas (oxygen permeability) was calculated by multiplying the test result in the air (air permeability) by a coefficient of 4.8.

### [Light blocking test]

Using a light penetrometer "Haze Gard Dual" made by BYK-Gardner GmbH , an outside of the container bottom is pressed on a photosensitive element of the penetrometer to apply light from the outside of the opening of the container and measure a ratio of light transmission (light permeability). This measurement was made for 30 samples each to evaluate light blocking effect by an average value of the measurements. In case of no light blocking effect, the value is shown as 100%.

### [Piercing strength test]

Using by Rheometer made by Rheotec, a maximum stress and pierced distance were measured when the container was pierced using a bar-type plunger of 2mm in diameter and 1R of a curved surface rate at the tip at a speed of 6 cm/min.

### [Buckling strength test]

5kN of load cell was installed on "Orientec-1250A" made by Orientec Corporation. Then, a plate-shaped disc larger than the opening of the container installed on the load cell sends down at a speed of 100.0 mm/min., and a load at a point of rupture was measured when the whole container was pressed and deformed.

### [Heat and water resistance test]

As stipulated in JAS (Japanese Agricultural Standard) for ready-to-eat noodle containers, hot water is poured in an empty container to check for deformation after 15 minutes and condition after 60 minutes (whether water (warm water) exudes through the container). There was no deformation or exudation of water (warm water). ("No change")

### [Thermal insulation and heat retention test]

Boiling water was poured inside the container and a thermoelectric couple connected to a temperature recorder is attached to the outer surface and the inner surface of the container to measure a change of temperature for 5 minutes.

### [Microwave oven test]

530 grams of water at 25°C is poured inside the container and heated at 600W output for 10 minutes in a household microwave oven to measure temperature on the outer surface of the container and to check for deformation of the container. [Biodegradability test]

Biodegradability was measured using JIS K6950 "Determination of the ultimate aerobic biodegradability of plastic materials in an aqueous medium - Method by measuring the oxygen demand in a closed respirometer".

### [Example 1]

First of all, 30.0 grams of high-amylose starch (corn starch containing 60% of amylose), 7.0 grams of coniferous virgin pulp as water-insoluble fiber (strength adjusting agent), 7.0 grams of calcium carbonate as strength adjusting agent, and 0.2 grams of guar gum as stabilizer and strength adjusting agent, and 55.8 grams of water were mixed to prepare 100.0 grams of dough molding material (hereinafter referred to as a molding material (1)).

Next, instead of high-amylose starch, 100 grams of dough molding material was prepared in the same way as the molding material (1) except that a mixture containing 25 weight % of potato starch and 75 weight % of high-amylose starch (corn starch containing 60 % of amylose) is used (hereinafter referred as to the molding material (2)).

In addition, 30.0 grams of potato starch as the main ingredient, 15.0 grams of polyvinyl alcohol, 4.0 grams of coniferous virgin pulp as water-insoluble fiber (strength adjusting agent), 10.0 grams of calcium carbonate as strength adjusting agent, and 0.2 grams of guar gum as stabilizer and strength adjusting agent, and 58.5 grams of water were mixed to prepare 127.7 grams of dough molding material (hereinafter referred to as the molding material (3)). In this case, weight of solids (components excluding water in the molding material) is 69.2 grams, and the percentage of solids in the molding material (percentage of solids to total weight of the molding material) is 54.2 weight %.

Next, in the aforementioned method 1 of the simultaneous attaching method, the above molding materials (1) to (3) as the above molding material 14, the biaxially stretched modified polyester film 35 µm thick as the coating film 12, and the metal mold 20a shown in fig. 8 (a) and 8 (b), were used to manufacture the bowl-shaped container 10a.

As for the heating method, both external heating to heat the metal mold 20a by an electric heater and internal heating by high-frequency dielectric heating were used. Also, in the external heating and internal heating, a temperature of the metal mold 20a was adjusted to 130 to 160°C.

Then, 4-layered film consisting of modified polyester, paper, aluminum (aluminum evaporation layer) and modified polyester is used as the lid 17. The above film was heat-sealed on the resultant bowl-shaped container 10a. More specifically, a surface closer to paper and aluminum in the above film (surface which is formed on aluminum and modified polyester is exposed on) and a flange face of the bowl-shaped container 10a were fit and heat-sealed by heating and pressing with a heated sealing die.

From the above, the bowl-shaped hermetically sealed container 50a was obtained. For the resultant bowl-shaped hermetically sealed container 50a, moisture impermeability test was made by the aforementioned test method, and change of weight by moisture permeation was calculated. The result was shown in table 1.

### [Example 2]

The bowl-shaped hermetically sealed container 50a was manufactured in the same way as example 1 except that a biaxially stretched modified polyester film of 50µm thick was used as the coating film 12.

### [Example 3]

35.0 grams of potato starch as the main ingredient, 7.0 grams of polyvinyl alcohol, 7.0 grams of coniferous virgin pulp as water-insoluble fiber (strength adjusting agent) , 0.3 grams of titanium dioxide as filling agent and coloring and 50.7 grams of water were mixed to prepare 100 grams of dough molding material (hereinafter referred to as the molding material (4)).

The bowl-shaped hermetically sealed container was manufactured in the same way as example 2 except that the molding material (4) was used as the molding material 14.

### [Example 4]

The bowl-shaped hermetically sealed container 50a was manufactured in the same way as example 3 except that water content of the main body was adjusted to 10% in an air conditioning device at 40°C and relative humidity of 90% after molding the main body.

For the resultant bowl-shaped hermetically sealed container 50a, moisture impermeability test was made in the aforementioned test method and change of weight by moisture permeation was worked out. Also, as comparison with the examples 1 to 3, a rehydrated (ready-to-eat) noodle container (made of Styrofoam, hereinafter sometimes referred to as a commercial product) was used as a standard for assessment. The result was shown in table 1.

**Table 1**

| | 10 days later | 20 days later | 30 days later |
|---|---|---|---|
| Example 1 | 8 g | 17 g | 27 g |
| Example 2 | 5 g | 12 g | 18 g |
| Example 3 | 6 g | 15 g | 25 g |
| Commercial product | 9 g | 18 g | 28 g |

From the results shown in table 1, it is found out that the hermetically sealed container of the present invention, has the same or more moisture impermeability compared with a hermetically sealed container made of foamed polystyrene.

### [Comparative example 1]

Next, 6 films that have different moisture impermeability were prepared to check whether the moisture impermeability attributes to the coating film covering a surface of the container:
a film (biaxially stretched polypropylene (OPP) film 50µm thick) of 2.8 cc/m² · 24 hrs · atm (28ml/m² · day · MPa) of moisture permeability
a film(biaxially stretched polypropylene film 25µm thick) of 5.5cc/m² · 24 hrs · atm (54ml/m² · day · MPa) of moisture permeability
a film (biaxially stretched polypropylene film 20µm thick) of 7.0cc/m²·24 hrs·atm (69ml/m²·day·MPa)of moisture permeability
a biodegradable film (biaxially stretched modified polyester film 50µm thick) of 32cc/m² · 24 hrs · atm (320ml/m² · day·MPa)of moisture permeability
a biodegradable film (biaxially stretched modified polyester film 30µm thick) of 46cc/m² · 24 hrs · atm (450ml/m² ·day·MPa)of moisture permeability, and
a biodegradable film (biaxially stretched modified polyester film 25µm thick) of 80cc/m² · 24 hrs · atm (790ml/m²·day·MPa)of moisture permeability

For each of these 6 films, two films are fit and formed into a similar shape to a bowl to make a bowl-shaped bag made of film equipped with a ring-shaped support at the outside to have the same inner volume. For the prepared six bowl-shaped bags, moisture impermeability test was made by the same way as the aforementioned test method.

### [Example 5]

Three varieties of bowl-shaped hermetically sealed container 50a were prepared in the same way as example 3 except that the coating film 12 only is replaced with one of these three biodegradable films (biaxially stretched modified polyester film) used in comparative example 1. For these films, moisture impermeability test was made in the same way as the aforementioned test method.

In result of the comparative example 1 and example 5, in case that two films only are fit (comparative example 1), unless moisture permeability of used film is not more than 5.5 cc/m² · 24 hrs · atm (54ml/m² · day · MPa),sufficient moisture impermeability is not exerted at the same level as a commercial product. On the other hand, for the bowl-shaped hermetically sealed container 50a (example 5) in accordance with the present invention, moisture permeability of the film used is not more than 46cc/m² · 24 hrs·atm (450ml/m² · day·MPa), which showed sufficient moisture impermeability at the same level as that of a commercial product.

It is thus found that in the hermetically sealed container in accordance with the present invention, the expanded molded article made of starch constituting the main body itself has a great effect to prevent permeability in addition to an effect to prevent permeability by the film on the surface.

In the present technique, it is difficult to achieve a biodegradable film of not less than 100 µm thick and 10cc/m² · 24 hrs·atm (98ml/m² ·day·MPa) of moisture permeability. However, from the result of example 5, it is proven that it is possible to manufacture a container having excellent moisture impermeability even if a film of 46-80cc/m² · 24 hrs · atm (450-790ml/m²·day·MPa) of moisture permeability which can be achieved as for a biodegradable film.

Also, for the bowl-shaped hermetically sealed container 50a obtained in examples 1 to 3, moisture resistance strength test was made as the aforementioned method. The result is shown in table 2.

**Table 2**

| | Deformation | Condition on surface | Strength |
|---|---|---|---|
| Example 1 | Not found | Good | ○ |
| Example 2 | Not found | Good | ⓞ |
| Example 3 | Not found | Good | ⓞ |

From the result shown in table 2, it is proven that the hermetically sealed container of the present invention eliminated weakness in high humidity which is a typical nature of an expanded molded article made of starch, and it has sufficient moisture resistance strength as a container.

Also, oxygen permeability test was made for the bowl-shaped hermetically sealed container 50a obtained in examples 1 to 4 by the aforementioned test method. For comparison with each example, a ready-to-eat noodle container on the market (made of Styrofoam) was used as a standard of evaluation. The result is shown in table 3.

**Table 3**

| | Oxygen permeability |
|---|---|
| Example 1 | 0.160% |
| Example 2 | 0.100% |
| Example 3 | 0.040% |
| Example 4 | 0.068% |
| Commercial product | ∞ (unmeasurable) |

From the result shown in table 3, it is proven that the hermetically sealed container in accordance with the present invention shows much more excellent oxygen impermeability than a container made of Styrofoam on the market and a hermetically sealed container that can be substantially used for protection from acidic denaturation of the contents.

Also, light blocking test was made for the bowl-shaped hermetically sealed container 50a obtained in examples 1 to 3 by the aforementioned test method. For comparison with each example, a ready-to-eat noodle container on the market (made of Styrofoam) was used as a standard of evaluation. The result is shown in table 4.

**Table 4**

| | Light permeability |
|---|---|
| Example 1 | 13.6% |
| Example 2 | 12.8% |
| Example 3 | 12.0% |
| Commercial products | 12.2% |

From the result shown in table 4, it is proven that the hermetically sealed container of the present invention has the same light impermeability as a container made of Styrofoam on the market.

Also, for the bowl-shaped hermetically sealed container 50a obtained in examples 1, 3 and 4, piercing strength test and buckling strength test were made by the above-mentioned method. In addition, for comparison with each example, a rehydrated noodle container on the market (made of Styrofoam)was used as a standard of evaluation. The result is shown in table'5.

**Table 5**

| | Piercing strength | | Buckling strength (load at ruptured point) |
|---|---|---|---|
| | Maximum stress | Pierced distance | |
| Example 1 | 3.0 kgf(29N) | 2.4mm | 146kgf(1.43kN) |
| Example 3 | 3.2 kgf(31N) | 2.8mm | 153kgf(1.50kN) |
| Example 4 | 2.6 kgf(25N) | 5.5mm | 122kgf(1.20kN) |
| Commercial product | 1.2 kgf(12N) | 6.0mm | 14.5kgf(140kN) |

From the result of maximum stress of piercing strength and buckling strength shown in table 5, it is proven that the hermetically sealed container of the present invention has more excellent rigidity than that of a container made of Styrofoam on the market. Also, from the result of pierced distance obtained by piercing strength test, the hermetically sealed container of the present invention has also almost the same flexibility as that of a container made of Styrofoam on the market.

For the bowl-shaped hermetically sealed container 50a obtained in examples 1 to 4, heat and water resistance test was made by the above-mentioned method. The result was shown in table 6.

**Table 6**

| | After 15 minutes | After 60 minutes |
|---|---|---|
| Example 1 | No change | No change |
| Example 2 | No change | No change |
| Example 3 | No change | No change |
| Example 4 | No change | No change |

From the result shown in table 6, it is found that there is no exudation of water or deformation. From this result it was found that the hermetically sealed container of the present invention has heat and water resistance that can be used without any problem when hot water is poured in the container to prepare ready-to-eat noodle.

Also, for the bowl-shaped hermetically sealed container 50a obtained in examples 1 to 4, heat insulation and thermal retention test was made by the above-mentioned method. For comparison with each sample, a ready-to-eat noodle container on the market (made of Styrofoam) was used as a standard of evaluation. The result is shown in table 7.

**Table 7**

| | 0 minute | | After 3 minutes | | After 5 minutes | |
|---|---|---|---|---|---|---|
| | Outer surface | Inner surface | Outer surface | Inner surface | Outer surface | Inner surface |
| Example 1 | 24°C | 24°C | 66°C | 83°C | 65°C | 80°C |
| Example 2 | 24°C | 24°C | 64°C | 85°C | 63°C | 82°C |
| Example 3 | 24°C | 24°C | 67°C | 89°C. | 65°C | 81°C |
| Example 4 | 24°C | 24°C | 66°C | 84°C | 65°C | 81°C |
| Commercial product | 24°C | 29°C | 63°C | 84°C | 63°C | 82°C |

From the result shown in table 7, it is proven that the hermetically sealed container of the present invention has the same heat insulation and thermal retention as that of a container made of Styrofoam on the market.

Also, for the bowl-shaped hermetically sealed container 50a obtained in example 3, microwave oven test was made by the above-mentioned method.

In the result, water in the container started to boil 6.5 minutes after the test started and continued boiling 10 minutes after the test started. The temperature on the outer surface of the container taken out from the oven 10 minutes after the start was 78°C at the highest that can be easily grasped with hands. There was no melted or deformed parts on the bowl-shaped hermetically sealed container 50a after 10-minute heating.

From the above, it is proven that the hermetically sealed container of the present invention can be proof against heating by a microwave oven, unlike a container made of Styrofoam on the market.

Moreover, to confirm biodegradability of the container, biodegradability test was made by the above-mentioned method for the bowl-shaped container 50a obtained in example 4. The result is shown in table 8.

**Table 8**

| | 10 days later | 20 days later | 30 days later |
|---|---|---|---|
| Example 4 | 28 % | 49 % | 68 % |

This test shows not less than 60 % of biodegradability in about 25 days. Also from the result in table 8, it is proven that the hermetically sealed container of the present invention has enough biodegradability.

The embodiments or examples shown in "BEST MODE FOR CARRYING OUT THE INVENTION" are intended to disclose technical information on the present invention, and it should not be interpreted that the present invention is limited to these examples or embodiments in narrow sense. The present invention can be executed by making various changes within the range of the claims described below under the sprit of the present invention.

### INDUSTRIAL APPLICABILITY

According to the present invention, as mentioned above, it is possible to provide a biodegradable hermetically sealed container having sufficient strength and at least sufficient water resistance and achieving a very excellent biodegradability.

Also, according to the present invention, as mentioned above, it is possible to provide a biodegradable hermetically sealed container having a function as a storage container such as enough strength to maintain quality of the contents during transportation or storage and to prevent damages, light blocking effect, flavor blocking effect and gas impermeability, a function as a cooking container such as heat resistance, water resistance and thermal retention, and a function as tableware such as heat resistance, good lip feel and easy grasp, as well as very excellent biodegradability.

Accordingly, the hermetically sealed container in accordance with the present invention is preferably used as a hermetically sealed container to a enclose food at the inside. Especially, as mentioned above, the hermetically sealed container needs a function as a storage container, a function as a cooking container, and a function as tableware, and can be preferably used as a hermetically sealed container to enclose ready-to-eat food such as rehydrated noodles at the inside to be disposed with residues of foods.

## Claims

1. A hermetically sealed container comprising:
a biodegradable main body having an internal space to contain contents and an opening to take in and out the contents; and
a lid mainly made of a plastic to seal the opening of the main body,
said main body including a biodegradable expanded molded article molded into a specified shape and a coating film attached to a surface of the biodegradable expanded molded article, said biodegradable expanded molded article being molded, through steam expansion, from a slurry or dough molding material mainly made of a starch and a derivative thereof and prepared by adding water to the starch or the derivative thereof, said coating film being mainly made of a biodegradable plastic and having at least hydrophobicity, said lid being heat-sealed to a rim of the opening.

2. The hermetically sealed container as set forth in claim 1, wherein said lid is a film mainly made of the biodegradable plastic.

3. The hermetically sealed container as set forth in claim 2, wherein, the biodegradable plastic for the coating film and the lid has a melting point of not less than 130°C.

4. The hermetically sealed container as set forth in any one of claims 1 to 3, wherein said biodegradable plastic is a modified polyester.

5. The hermetically sealed container as set forth in any one of claims 1 to 4, wherein said coating film is a biaxially stretched.

6. The hermetically sealed container as set forth in any one of claims 1 to 5, wherein a food is enclosed as the contents inside the main body.

7. The hermetically sealed container as set forth in claim 6, wherein ready-to-eat noodles are contained as said food inside the main body.

8. The hermetically sealed container as set forth in any one of claim 1 to 7, wherein said lid is a laminated film prepared by laminating a biodegradable film made of a biodegradable plastic and a light blocking layer.

9. The hermetically sealed container as set forth in claim 8, wherein the light blocking layer includes a metal evaporation layer and a paper layer.

10. The hermetically sealed container as set forth in any one of claims 1 to 9, wherein said biodegradable expanded molded article contains titanium dioxide.

11. The hermetically sealed container as set forth in any one of claims 1 to 10, wherein weight of said-biodegradable expanded molded article accounts for not less than 60 weight % of the total weight of the main body.

12. The hermetically sealed container as set forth in any one of claims 1 to 11, wherein if the total weight is taken as 100 weight %, the molding material includes water which accounts for 20 weight % to 70 weight %, of the hermetically sealed container.

13. The hermetically sealed container as set forth in any one of claims 1 to 12, wherein the coating film is directly and substantially adhered to the surface.

14. The hermetically sealed container as set forth in any one of claims 1 to 13, wherein the biodegradable expanded molded article has a final water content between 3 weight % and 20 weight %.
